(19) Europäisches Patentamt
European Patent Office
Office européen des brevets

(11) **EP 4 567 010 A1**

(12) **EUROPEAN PATENT APPLICATION**

(43) Date of publication:
**11.06.2025 Bulletin 2025/24**

(21) Application number: **24217524.8**

(22) Date of filing: **04.12.2024**

(51) International Patent Classification (IPC):
***C03C 3/06*** (2006.01)   ***C03C 3/076*** (2006.01)

(52) Cooperative Patent Classification (CPC):
**C03C 3/06; C03B 19/066; C03B 19/14; C03C 3/076;** C03B 2201/075; C03B 2201/42; C03C 2201/23; C03C 2201/42; C03C 2203/54

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.12.2023 US 202363606294 P**
**17.01.2024 NL 2036826**

(71) Applicant: **Corning Incorporated**
**Corning, New York 14831 (US)**

(72) Inventors:
• Campion, Michael John
  Corning 14831 (US)
• Shubin, Sergey Nikolaevich
  Corning 14831 (US)
• Zhou, Chunfeng
  Corning 14831 (US)

(74) Representative: **Arnold & Siedsma**
**Bezuidenhoutseweg 57**
**2594 AC The Hague (NL)**

(54) **GLASS SUBSTRATES COMPRISING SILICA-BASED GLASS WITH INCREASED HYDROXYL GROUP UNIFORMITY, AND METHODS OF FORMING THE SAME**

(57)    A glass substrate including a silica-based glass, the silica-based glass includes silica and from 0 wt.% to 15 wt.% titania. A first portion of the silica-based glass has a height of 1.0 mm and a first cross-section having an area greater than or equal to 50.0 cm$^2$. A first sub-portion of the first portion has a height of 1.0 mm, a length of 40.0 mm, a width of 40.0 mm, and a second cross-section. A peak-to-valley difference of a hydroxyl group concentration of the first sub-portion is less than or equal to 15 ppm, as measured at the second cross-section. A method of forming a glass substrate includes heating a molded precursor mass. The molded precursor mass includes soot particles. The heating includes exposing the molded precursor mass to a consolidation environment containing steam, and maintaining the molded precursor mass in the consolidation environment while reducing the consolidation temperature.

FIG. 14

EP 4 567 010 A1

**Description**

<u>FIELD</u>

The present specification generally relates to glass compositions. More specifically, the present specification is directed glass substrates that include silica-based glass with increased hydroxyl group uniformity and methods of forming the glass substrates.

<u>BACKGROUND</u>

Extreme ultraviolet (EUV) lithography uses optics to illuminate, project, and reduce pattern images to form integrated circuit patterns. The use of extreme ultraviolet radiation is beneficial in that smaller integrated circuit features can be achieved. The optics for EUV lithography are currently made from low thermal expansion glass, such as silica-titania glass. The glass is traditionally made by a flame hydrolysis or flame oxidation process in which high purity precursors are injected into flames to form fine glass particles ("soot"). Depending on process conditions, the fine glass particles are directed to a hot surface for immediate consolidation to form a glass. Alternatively, the fine glass particles can be collected and then shaped into an article by axial pressing, radial pressing, or cold isostatic pressing in a soot pressing process.

In EUV lithography systems, the glass is typically coated with a reflective surface to form a reflective mirror or with layers that are ultimately patterned to form a photomask. Furthermore, the glass, in an EUV lithography system, must be able to meet stringent thermal expansion requirements in the system. Specifically, the glass must be able to maintain its surface shape (known as "figure") when subject to temperature changes in the system. A temperature stable glass can help to avoid any induced distortions in the wavefront characteristics of EUV projection optics.

<u>SUMMARY</u>

Therefore, an ongoing need exists for glass substrates including silica-based glass having greater thermal stability and methods of making glass substrates to improve thermal stability thereof. Embodiments of the present disclosure provide a glass substrate comprising silica-based glass having improved hydroxyl group concentration uniformity and methods of making the glass substrate to provide the improved hydroxyl group concentration uniformity. The improved hydroxyl group concentration uniformity of the glass substrate comprising silica-based glass provides increased thermal stability to the silica-based glass, thereby enabling glass articles made from the silica-based glass to better maintain surface shape in response to temperature changes. The methods of forming the glass substrate disclosed herein include exposing a molded precursor mass formed from fine glass particles to a consolidation environment having a consolidation temperature and maintaining the molded precursor mass in the consolidation environment while reducing the consolidation temperature, which can compensate for hydroxyl non-uniformity caused by internal vapor pressure gradients that form within the molded precursor mass during consolidation. The result is a silica-based glass having a more uniform distribution of hydroxyl concentration, and hence a more uniform coefficient of thermal expansion (CTE), throughout or over extended portions of its volume.

A first aspect of the disclosure is directed to a glass substrate comprising a silica-based glass, the silica-based glass comprising silica, and from greater than or equal to 0 weight percent (wt.%) to less than or equal to 15.0 wt.% titania, wherein: a first portion of the silica-based glass has a height of 1.0 millimeter (mm) and a first cross-section having an area greater than or equal to 50.0 cm$^2$, wherein the first cross-section is perpendicular to a direction of the height of the first portion; and a first sub-portion of the first portion of the silica-based glass has a height of 1.0 mm, a length of 40.0 mm, a width of 40.0 mm, and a second cross-section wherein: the second cross-section is perpendicular to a direction of the height of the first sub-portion; and a peak-to-valley difference of a hydroxyl group concentration of the first sub-portion is less than or equal to 15 parts per million (ppm), as measured at the second cross-section.

A second aspect of the disclosure may include the first aspect, wherein the silica-based glass has a height of greater than 5.0 mm.

A third aspect of the disclosure may include either one of the first or second aspects, wherein the silica-based glass has a largest dimension greater than or equal to 100 mm, greater than or equal to 200 mm, or greater than or equal to 500 mm, or greater than or equal to 1.0 m.

A fourth aspect of the disclosure may include any one of the first through third aspects, wherein the first cross-section has an area greater than or equal to 75.0 cm$^2$, greater than or equal to 100.0 cm$^2$, greater than or equal to 125.0 cm$^2$, greater than or equal to 150.0 cm$^2$, or greater than or equal to 175.0 cm$^2$.

A fifth aspect of the disclosure may include any one of the first through fourth aspects, wherein the first sub-portion of the first portion of the silica-based glass has an average hydroxyl group concentration of greater than or equal to 600 ppm, greater than or equal to 700 ppm, or greater than or equal to 800 ppm.

A sixth aspect of the disclosure may include any one of the first through fifth aspects, wherein the first sub-portion of the first portion of the silica-based glass has an average hydroxyl group concentration of from greater than or equal to 50 ppm to less than or equal to 2000 ppm.

A seventh aspect of the disclosure may include any one of the first through sixth aspects, wherein the first sub-portion of the first portion of the silica-based glass has a peak-to-valley difference of hydroxyl group concentration of less than or equal to 12.0 ppm, less than or equal to 10.0 ppm, less than or equal to 8.0 ppm, less than or equal to 5.0 ppm, less than or equal to 3.0 ppm, or less than or equal to 1.0 ppm.

An eighth aspect of the disclosure may include any one of the first through seventh aspects, wherein the silica-based glass comprises from greater than or equal to 5.0 wt.% to less than or equal to 10.0 wt.% titania.

A ninth aspect of the disclosure may include any one of the first through eighth aspects, wherein the silica-based glass has a mass of from 100 grams to 1 kilogram.

A tenth aspect of the disclosure may include any one of the first through ninth aspects, wherein silica-based glass has a mass of greater than or equal to 1 kilogram.

An eleventh aspect of the disclosure may include any one of the first through tenth aspects, wherein the first sub-portion of the first portion of the silica-based glass has a coefficient of thermal expansion (CTE) at 20 °C of from greater than or equal to -45.0 ppb/K to less than or equal to 20.0 ppb/K.

A twelfth aspect of the disclosure may include any one of the first through eleventh aspects, wherein the first sub-portion of the first portion of the silica-based glass has a slope of CTE at 20 °C of from greater than or equal to 1.0 ppb/$K^2$ to less than or equal to 2.5 ppb/$K^2$.

A thirteenth aspect of the disclosure may include any one of the first through twelfth aspects, wherein the first portion of the silica-based glass has a center point and an outer point, the outer point being radially outward from the center point, and wherein a hydroxyl group concentration at the outer point is greater than a hydroxyl group concentration at the center point.

A fourteenth aspect of the disclosure may include any one of the first through twelfth aspects, wherein hydroxyl groups are distributed throughout the silica-based glass.

A fifteenth aspect of the disclosure may include any one of the first through fourteenth aspects, a second sub-portion of the first portion a height of 1.0 mm, a length of 40.0 mm, a width of 40.0 mm, and a third cross-section wherein: the third cross-section is perpendicular to a direction of the height of the second sub-portion; and a center point of the second cross-section and a center point of the third cross-section are separated by a horizontal separation distance; and an absolute value of a difference of an average hydroxyl group concentration of the first sub-portion, as measured at the second cross-section, and an average hydroxyl group concentration of the second sub-portion, as measured at the third cross-section, is less than or equal to 15.0 ppm.

A sixteenth aspect of the disclosure may include the fifteenth aspect, wherein the horizontal separation distance is greater than or equal to 5.0 mm, greater than or equal to 20.0 mm, greater than or equal to 50.0 mm, or greater than or equal to 75.0 mm.

A seventeenth aspect of the disclosure may include either one of the fifteenth or sixteenth aspects, wherein the absolute value of the difference of the average hydroxyl group concentration of the first sub-portion and the average hydroxyl group concentration of the second sub-portion is less than or equal to 10.0 ppm, less than or equal to 5.0 ppm, less than or equal to 3.0 ppm, or less than or equal to 2.0 ppm.

An eighteenth aspect of the disclosure may include any one of the first through seventeenth aspects, a second portion of the silica-based glass has a height of 1.0 millimeter (mm) and a fourth cross-section having an area greater than or equal to 50.0 cm$^2$, wherein the fourth cross-section is perpendicular to a direction of the height of the second portion; and a third sub-portion of the second portion of the silica-based glass has a height of 1.0 mm, a length of 40.0 mm, a width of 40.0 mm, and a fifth cross-section wherein: the fifth cross-section is perpendicular to a direction of the height of the third sub-portion; and the third sub-portion of the second portion and the first sub-portion of the first portion are parallel and separated by a vertical separation distance; and an absolute value of a difference of an average hydroxyl group concentration of the first sub-portion, as measured at the second cross-section, and an average hydroxyl group concentration of the third sub-portion, as measured at the fifth cross-section, is less than or equal to 15.0 ppm.

A nineteenth aspect of the disclosure may include the eighteenth aspect, wherein the vertical separation distance is greater than or equal to 1 mm, greater than or equal to 2 mm, greater than or equal to 3 mm, greater than or equal to 4 mm, or greater than or equal to 5 mm.

A twentieth aspect of the disclosure may include either one of the eighteenth or nineteenth aspects, wherein the absolute value of the difference of the average hydroxyl group concentration of the first sub-portion and the average hydroxyl group concentration of the second sub-portion is less than or equal to 10.0 ppm, less than or equal to 5.0 ppm, less than or equal to 3.0 ppm, or less than or equal to 2.0 ppm.

A twenty-first aspect of the disclosure is directed to a method of forming a glass substrate, comprising: heating a molded precursor mass, the molded precursor mass comprising soot particles, the soot particles comprising silica and less than or equal to 15 wt.% titania, the heating comprising: exposing the molded precursor mass to a consolidation environment having a consolidation temperature, the consolidation environment containing steam, the exposing comprising maintaining the molded precursor mass in the consolidation environment for a time sufficient to increase a density of the molded precursor mass from an initial density to a threshold density, the threshold density less than 2.00 g/cm$^3$; and maintaining the molded precursor mass in the consolidation environment while reducing the consolidation temperature, the maintaining increasing the density of the molded precursor mass from the threshold density to a final density greater than 2.00 g/cm$^3$.

A twenty-second aspect of the disclosure may include the twenty-first aspect, wherein the initial density is less than or equal to 1.20 g/cm$^3$.

A twenty-third aspect of the disclosure may include either one of the twenty-first or twenty-second aspects, wherein the threshold density is greater than or equal to 1.20 g/cm$^3$ and less than or equal to 1.60 g/cm$^3$.

A twenty-fourth aspect of the disclosure may include any one of the twenty-first through twenty-third aspects, wherein: a first portion of the silica-based glass has a height of 1.0 mm and a first cross-section having an area greater than or equal to 50.0 cm$^2$, wherein the first cross-section is perpendicular to a direction of the height of the first portion; and a first sub-portion of the first portion of the silica-based glass has a height of 1.0 mm, a length of 40.0 mm, a width of 40.0 mm, and a second cross-section wherein: the second cross-section is perpendicular to a direction of the height of the first sub-portion; and a peak-to-valley difference of a hydroxyl group concentration of the first sub-portion, is less than or equal to 15 parts per million (ppm), as measured at the second cross-section.

A twenty-fifth aspect of the disclosure may include any one of the twenty-first through twenty-fourth aspects, further comprising, prior to heating the molded precursor mass, forming soot particles as loose soot particles.

A twenty-sixth aspect of the disclosure may include any one of the twenty-first through twenty- fifth aspects, further comprising, prior to heating the molded precursor mass, molding soot particles into a molded precursor mass having an initial density of from greater than or equal to 0.50 g/cm$^3$ to less than 1.50 g/cm$^3$.

A twenty-seventh aspect of the disclosure may include any one of the twenty-first through twenty- sixth aspects, wherein the heating comprises subjecting the molded precursor mass to the consolidation environment into which steam is introduced to achieve a partial pressure of steam within the consolidation environment of from greater than or equal to 0.10 kilopascals (kPa) to less than or equal to 1,000 kPa.

A twenty-eighth aspect of the disclosure may include any one of the twenty-first through twenty-seventh aspects, wherein the consolidation environment comprises greater than or equal to 50 volume percent (vol.%), greater than or equal to 60 vol.%, greater than or equal to 70 vol.%, greater than or equal to 80 vol.%, greater than or equal to 90 vol.%, greater than or equal to 95 vol.%, greater than or equal to 99 vol.%, or 100 vol.% steam, based on a total volume of gases in the consolidation environment.

A twenty-ninth aspect of the disclosure may include any one of the twenty-first through twenty-eighth aspects, wherein the consolidation environment comprises a partial pressure of steam of from greater than or equal to 0.10 kilopascals (kPa) to less than or equal to 100 kPa.

A thirtieth aspect of the disclosure may include any one of the twenty-first through twenty-ninth aspects, wherein the consolidation temperature is of from 900 °C to 1300 °C.

A thirty-first aspect of the disclosure may include any one of the twenty-first through thirtieth aspects, wherein the heating is operated for a time of from 10 hours to 300 hours.

A thirty-second aspect of the disclosure may include any one of the twenty-first through thirty-first aspects, wherein: the consolidation temperature is of from 1,000 °C to 1,200 °C; and the heating is operated for a time of from 50 hours to 200 hours.

A thirty-third aspect of the disclosure may include any one of the twenty-first through thirty-second aspects, wherein the heating comprises increasing the consolidation temperature at a rate of from 0.50 °C per hour to 100 °C per hour for a first duration of time.

A thirty-fourth aspect of the disclosure may include the thirty-third aspect, wherein maintaining the molded precursor mass in the consolidation environment while reducing the consolidation temperature comprises, after the first duration of time, reducing the consolidation temperature at a rate of from 0.010 °C per hour to 5.0 °C per hour for a second duration of time.

A thirty-fifth aspect of the disclosure may include either one of the thirty-third or thirty-fourth aspects, wherein the first duration of time is from 10 hours to 100 hours.

A thirty-sixth aspect of the disclosure may include any one of the twenty-first through thirty-fifth aspects, wherein maintaining the molded precursor mass in the consolidation environment while reducing the consolidation temperature comprises reducing the consolidation temperature at a rate of from about 0.10 °C per hour to 5.0 °C per hour for a second duration of time.

A thirty-seven aspect of the disclosure may include any one of the twenty-first through thirty-fifth aspects, wherein maintaining the molded precursor mass in the consolidation environment while reducing the consolidation temperature comprises reducing the consolidation temperature at a rate of from 0.10 °C per hour to 2.50 °C per hour for a second duration of time.

A thirty-eighth aspect of the disclosure may include any one of the thirty-fourth through thirty-seventh aspects, wherein the second duration of time is of from 10 hours to 100 hours.

A thirty-ninth aspect of the disclosure may include any one of the twenty-first through thirty-eighth aspects, further comprising: melting the silica-based glass into a melt that flows into a mold; and cooling the melt.

A fortieth aspect of the disclosure is directed to a method of forming a glass article comprising the glass substrate of any one of the first through twentieth aspects.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary and are intended to provide an overview or framework to understand the nature and character of the claims.

The accompanying drawings are included to provide a further understanding and are incorporated in and constitute a part of this specification. The drawings are illustrative of selected aspects of the present description, and together with the specification serve to explain principles and operation of methods, products, and compositions embraced by the present description. Features shown in the drawing are illustrative of selected embodiments of the present description and are not necessarily depicted in proper scale.

## BRIEF DESCRIPTION OF THE DRAWINGS

While the specification concludes with claims particularly pointing out and distinctly claiming the subject matter of the description, it is believed that the description will be better understood from the following specification when taken in conjunction with the accompanying drawings, wherein:

FIG. 1A schematically depicts an exemplary glass substrate, according to embodiments disclosed herein;

FIG. 1B schematically depicts an exemplary glass substrate, according to embodiments disclosed herein;

FIG. 2 schematically depicts a first portion of the glass substrate of FIG. 1A and a sub-portion of the first portion, according to embodiments disclosed herein;

FIG. 3 schematically depicts a cross-section of a sub-portion of a first portion of a glass substrate, according to embodiments disclosed herein;

FIG. 4 is a flowchart of a method of forming a glass substrate, according to embodiments disclosed herein;

FIG. 5 is a flowchart of a method of forming a glass substrate, according to embodiments disclosed herein;

FIG. 6 schematically depicts a system to form soot particles, according to embodiments disclosed herein;

FIG. 7 is a plot of temperature (y-axis - left) and steam pressure conditions (y-axis - right) as functions of time (x-axis) during heat treatment of a comparative method for forming a glass substrate, according to the prior art;

FIG. 8 is a plot of temperature (y-axis - left) and density of the glass substrate (y-axis - right) as functions of time (x-axis) during heat treatment using a comparative method for forming the glass substrate, according to the prior art;

FIG. 9 schematically depicts a molded precursor mass having a center point and an outer point, according to embodiments disclosed herein;

FIG. 10A is a plot of pore pressure (y-axis) of a molded precursor mass as a function of time (x-axis) during heat treatment of a comparative method, according to the prior art;

FIG. 10B is magnified portion of the plot of FIG. 10A, according to the prior art;

FIG. 11 schematically depicts a consolidated product having a center point and a line radially outward from the center point, according to embodiments disclosed herein;

FIG. 12 is a plot of average hydroxyl group concentration (y-axis) as a function of radial position (x-axis) in a glass substrate formed by a comparative method, according to the prior art;

FIG. 13 is a plot of temperature (y-axis - left) and steam pressure conditions (y-axis - right) as functions of time (x-axis) during heat treatment for forming a glass substrate, according to embodiments disclosed herein;

FIG. 14 is a plot of average hydroxyl group concentration (y-axis) as a function of radial position (x-axis) in a glass substrate prepared by a heat treating method comprising a temperature ramp down step, according to embodiments disclosed herein; and

FIG. 15 is a plot of average hydroxyl group concentration (y-axis - left) and peak-to-valley difference of hydroxyl group concentration (y-axis - right) as a function of temperature ramp down rate (x-axis) during consolidation for a silica-based glass, according to embodiments disclosed herein.

## DETAILED DESCRIPTION

Reference will now be made in detail to embodiments of the glass substrates and methods of making the glass substrates, various embodiments of which will be described herein with specific reference to the accompanying drawings. Whenever possible, the same reference numerals will be used throughout the drawings to refer to the same or like parts. The present disclosure is directed to a glass substrate comprising a silica-based glass with improved temperature stability and improved homogeneity and uniformity. Embodiments of the present disclosure provide glass substrates comprising silica-based glass with substantially uniform hydroxyl group concentrations across a sub-portion of the silica-based glass. The present disclosure is also directed to methods of forming the glass substrate comprising the silica-based glass that includes heating a molded precursor mass, where the heating comprises exposing the molded precursor mass to a consolidation environment having a consolidation temperature for a time sufficient to increase the density of the molded precursor mass from an initial density to a threshold density, and maintaining the molded precursor mass in the consolidation environment while reducing the consolidation temperature, increasing the density of the molded precursor mass from the threshold density to a final density.

In the following detailed description, numerous specific details may be set forth in order to provide a thorough understanding of embodiments described herein. However, it will be clear to one skilled in the art when embodiments may be practiced without some or all of these specific details. In other instances, well-known features or processes may not be described in detail so as not to unnecessarily obscure the disclosure. In addition, like or identical reference numerals may be used to identify common or similar elements. Moreover, unless otherwise defined, all technical and scientific terms used herein have the same meaning as commonly understood by one of ordinary skill in the art to which this disclosure belongs. In case of conflict, the present specification, including the definitions herein, will control.

Although other methods and materials can be used in the practice or testing of the embodiments, certain suitable methods and materials are described herein.

Disclosed are materials, compounds, compositions, and components that can be used for, can be used in conjunction with, can be used in preparation for, or are embodiments of the disclosed method and compositions. These and other materials are disclosed herein, and it is understood that when combinations, subsets, interactions, groups, etc. of these materials are disclosed that while specific reference of each various individual and collective combinations and permutation of these compounds may not be explicitly disclosed, each is specifically contemplated and described herein.

Thus, if a class of substituents A, B, and C are disclosed as well as a class of substituents D, E, and F, and an example of a combination embodiment, A-D is disclosed, then each is individually and collectively contemplated. Thus, in this example, each of the combinations A-E, A-F, B-D, B-E, B-F, C-D, C-E, and C-F are specifically contemplated and should be considered disclosed from disclosure of A, B, and/or C; D, E, and/or F; and the example combination A-D. Likewise, any subset or combination of these is also specifically contemplated and disclosed. Thus, for example, the sub-group of A-E, B-F, and C-E are specifically contemplated and should be considered disclosed from disclosure of A, B, and/or C; D, E, and/or F; and the example combination A-D. This concept applies to all aspects of this disclosure including, but not limited to any components of the compositions and steps in methods of making and using the disclosed compositions. More specifically, the example composition ranges given herein are considered part of the specification and further, are considered to provide example numerical range endpoints, equivalent in all respects to their specific inclusion in the text, and all combinations are specifically contemplated and disclosed. Further, if there are a variety of additional steps that can be performed it is understood that each of these additional steps can be performed with any specific embodiment or combination of embodiments of the disclosed methods, and that each such combination is specifically contemplated and should be considered disclosed.

Moreover, where a range of numerical values is recited herein, comprising upper and lower values, unless otherwise stated in specific circumstances, the range is intended to include the endpoints thereof, and all integers and fractions within the range. It is not intended that the scope of the disclosure be limited to the specific values recited when defining a range. Further, when an amount, concentration, or other value or parameter is given as a range, one or more preferred ranges or a list of upper preferable values and lower preferable values, this is to be understood as specifically disclosing all ranges formed from any pair of any upper range limit or preferred value and any lower range limit or preferred value, regardless of whether such pairs are separately disclosed. Finally, when the term "about" is used in describing a value or an endpoint of a range, the disclosure should be understood to include the specific value or endpoint referred to.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. For purposes of the present disclosure, the term "about" when used in reference to a numerical value means the numerical value is within a range defined by $\pm 3$ of the last decimal place of the numerical value. For example, the numerical value "about 10.0" means a value between 9.7 and 10.3.

It is noted that one or more of the claims may utilize the term "wherein" as a transitional phrase. For the purposes of defining the present disclosure, it is noted that this term is introduced in the claims as an open-ended transitional phrase that is used to introduce a recitation of a series of characteristics of the structure and should be interpreted in like manner as the more commonly used open-ended preamble term "comprising."

As a result of the raw materials and/or equipment used to produce the glass compositions discussed herein, certain impurities or components that are not intentionally added, can be present in the final glass composition. Such materials are present in the glass composition in minor amounts and are referred to herein as "tramp materials."

As used herein, a glass composition having 0 (zero) mole percent (mol%) or 0 weight percent (wt.%) of a compound is defined as meaning that the compound, molecule, or element was not purposefully added to the composition, but the composition may still comprise the compound, typically in tramp amounts. Similarly, "iron-free," "sodium-free," "lithium-free," "zirconium-free," "alkali earth metal-free," "heavy metal-free" or the like are defined to mean that the compound, molecule, or element was not purposefully added to the composition, but the composition may still comprise iron, sodium, lithium, zirconium, alkali earth metals, or heavy metals, etc., but in approximately tramp amounts.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation; and the number or type of embodiments described in the specification.

As used herein, the singular forms "a," "an" and "the" include, in addition to single referents, plural referents unless the context clearly dictates otherwise. Thus, for example, reference to "a" component includes aspects having two or more such components, unless the context clearly indicates otherwise.

Directional terms as used herein-for example up, down, right, left, front, back, top, bottom, vertical, horizontal-are made only with reference to the figures as drawn and are not intended to imply absolute orientation unless otherwise expressly stated.

Any ranges used herein include all ranges and subranges and any values there between unless explicitly stated otherwise.

EUV lithography technology relies on an optical projection system to expose a reflective photomask with EUV light, such that light reflected from the photomask is directed to a thin photosensitive layer deposited on the surface of a semiconductor wafer. This technique is commonly used in the semiconductor device production process. EUV lithography systems operate at a wavelength of light of about 13.5 nm. This extremely short wavelength poses challenges to the design of the EUV systems. For example, reflective coatings on the mirror or photomask substrates in EUV systems are not able to reflect all of the light with such a low wavelength. In some instances, an appreciable fraction of the light may be absorbed by the reflective coatings, rather than reflected. The absorbed light produces undesirable heat in the mirror or photomask substrate, causing the mirror or photomask substrate to thermally expand and contract during use. Dimensional changes in the mirror or photomask substrate can cause the reflective coating, on the mirror or photomask substrate, to deform, which leads to distortions in the wavefront of the reflected light. Wavefront distortions may lead to deterioration in the resolution of the EUV system and errors in the patterns formed on the photosensitive layer. Thus, the mirror and photomask substrates must be able to maintain their shape and figure even when subjected to the demanding thermal loads of EUV systems.

There is a need to reduce the coefficient of thermal expansion (CTE) of glass substrates in EUV systems. A low CTE at room temperature may allow the shape of the glass substrate to remain substantially constant when heated in an EUV system. Modifiers may be added to glass substrates to reduce their CTE. However, such modifiers are known to decrease the homogeneity of the glass. A homogenous glass with a uniform composition is also important so that the glass can be easily polished and has favorable thermal expansion behavior over the entire glass body.

The embodiments of the present disclosure provide a glass substrate comprising a homogenous silica-based glass with uniform composition. The glass substrates can be used as substrates for mirrors or photomasks in EUV systems. Specifically, embodiments of the present disclosure provide a glass substrate comprising a silica-based glass with a uniform hydroxyl group concentration throughout a sub-portion of the silica-based glass. Such uniform hydroxyl group concentrations provide a glass substrate that can be easily polished while maintaining the overall low CTE value. The improved uniformity of the hydroxyl group concentrations can improve the thermal stability of the glass substrates. The methods disclosed herein can also be utilized to tune the concentration profile of hydroxyl groups within the glass substrate.

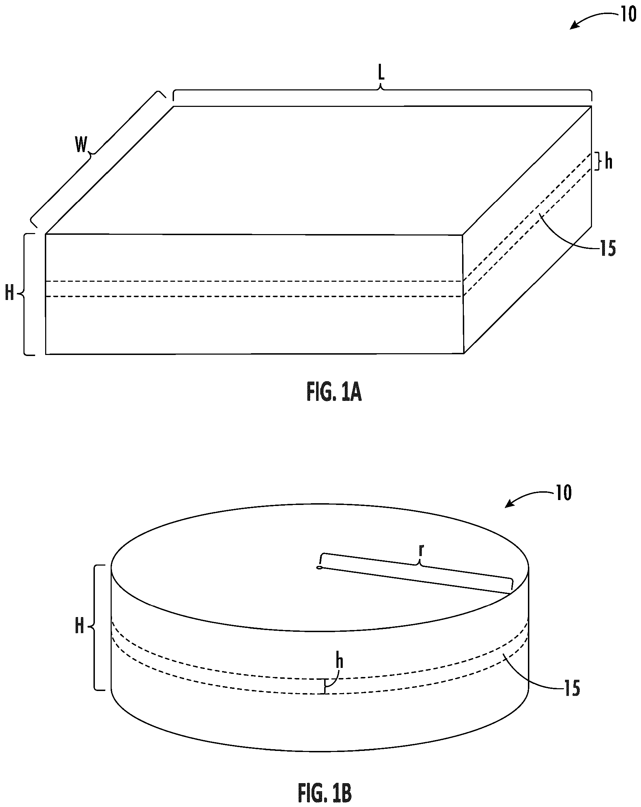

FIG. 1A shows a glass substrate 10 comprising the silica-based glass disclosed herein. The glass substrate 10 may have a length (L), a width (W), and a height (H). In embodiments, each of the length and the width may be greater than the height (H). In embodiments, the length (L) and the width (W) may each be independently less than or equal to about 2.0 meters (m), less than or equal to about 1.5 m, less than or equal to about 1.0 m, less than or equal to about 950 millimeters (mm), less than or equal to about 900 mm, less than or equal to about 850 mm, less than or equal to about 800 mm, less than or equal to about 750 mm, less than or equal to about 700 mm, less than or equal to about 650 mm, less than or equal to about 600 mm, less than or equal to about 550 mm, less than or equal to about 500 mm, less than or equal to about 450 mm, less than or equal to about 400 mm, less than or equal to about 350 mm, less than or equal to about 300 mm, less than or equal to about 250 mm, less than or equal to about 200 mm, less than or equal to about 150 mm, less than or equal to about 100 mm, less than or equal to about 75 mm, less than or equal to about 50 mm, less than or equal to about 25 mm, less than or equal to about 20 mm, or less than or equal to about 15 mm. In embodiments, the length and width of the glass substrate 10 may be each independently greater than or equal to about 15 mm, greater than or equal to about 20 mm, greater than or equal to about 25 mm, greater than or equal to about 50 mm, greater than or equal to about 75 mm, greater than or equal to about 100 mm, greater than or equal to about 150 mm, greater than or equal to about 200 mm, greater than or equal to about 250 mm, greater than or equal to about 300 mm, greater than or equal to about 350 mm, greater than or equal to about 400 mm, greater than or equal to about 450 mm, greater than or equal to about 500 mm, greater than or equal to about 600 mm, greater than or equal to about 700 mm, greater than or equal to about 800 mm, greater than or equal to about 800 mm, greater than or equal to about 900 mm, or greater than or equal to about 1.0 m. In embodiments, both the length and the width may be about 150 mm, greater than or equal to about 152 mm, or greater than or equal to about 179 mm. In embodiments, the length can be different from the width. In embodiments, the glass substrate 10 may have a largest dimension (length or width or height) greater than or equal to about 100 mm, greater than or equal to about 125 mm, or greater than or equal to about 150 mm. In embodiments, the glass substrate may have a largest dimension less than or equal to about 500 mm, less than or equal to about 450 mm, less than or equal to about 400 mm, less than or equal to about 350 mm, less than or equal to about 300 mm, less than or equal to about 250 mm, or less than or equal to about 200 mm.

Although FIG. 1A depicts the glass substrate 10 as having a square cross-sectional shape with flat surfaces, it is understood that the glass substrate 10 may have other shapes, such as but not limited to a cylindrical shape having a circular, elliptical, non-symmetrical or irregular cross-sectional shape. In embodiments, the glass substrate can be curved, such as having a concave and/or convex structure or surface. FIG. 1B shows a glass substrate 10 comprising the silica-based glass disclosed herein, wherein the glass substrate 10 has a circular cross-section. In embodiments, the glass substrate 10 may have a radius (r) and a height (H). In embodiments, the radius (r) may be greater than or equal to one half of the height (H). In embodiments, the radius (r) may be less than or equal to about 250 mm, less than or equal to about 200 mm, less than or equal to about 175 mm, less than or equal to about 150 mm, less than or equal to about 125 mm, less than or equal to about 114 mm, less than or equal to about 100 mm, less than or equal to about 75 mm, less than or equal to about 50 mm, or less than or equal to about 40 mm. Additionally or alternatively, in embodiments, the radius (r) of the glass substrate 10 may be greater than or equal to about 40 mm, greater than or equal to about 50 mm, greater than or equal to about 75 mm, greater than or equal to about 100 mm, greater than or equal to about 125 mm, greater than or equal to about 150 mm, greater than or equal to about 175 mm, greater than or equal to about 200 mm, or greater than or equal to about 225 mm. In embodiments, the radius (r) may be about 75 mm, greater than or equal to about 76 mm, or greater than or equal to about 79 mm.

The height (H) of the glass substrate 10 may be less than each of the length (L) and the width (W), or less than two times the radius (r). In embodiments, the height (H) may be less than or equal to about 400 mm, less than or equal to about 350 mm, less than or equal to about 300 mm, less than or equal to about 250 mm, less than or equal to about 200 mm, less than or equal to about 150 mm, less than or equal to about 100 mm, less than or equal to about 75 mm, less than or equal to about 50 mm, less than or equal to about 25 mm, less than or equal to about 20 mm, less than or equal to about 15 mm, less than or equal to about 10 mm, or less than or equal to about 5 mm. Additionally or alternatively, in embodiments, the height may be greater than or equal to about 5 mm, greater than or equal to about 10 mm, greater than or equal to about 15 mm, greater than or equal to about 20 mm, greater than or equal to about 25 mm, greater than or equal to about 50 mm, greater than or equal to about 75 mm, greater than or equal to about 100 mm, greater than or equal to about 150 mm, greater than or equal to about 200 mm, greater than or equal to about 250 mm, greater than or equal to about 300 mm, or greater than or equal to about 350 mm. In embodiments, the height may be about 63 mm, about 150 mm, or about 152 mm.

Referring again to FIG. 1A, the glass substrate 10 may comprise at least one portion, such as a first portion 15, having a length and a width less than or equal to the length and width of the glass substrate 10, respectively. Referring again to FIG. 1B, the glass substrate 10 may comprise at least one portion, such as a first portion 15, having a radius less than or equal to the radius of the glass substrate 10. In embodiments, the height (h) of the first portion 15 is about 1.0 mm.

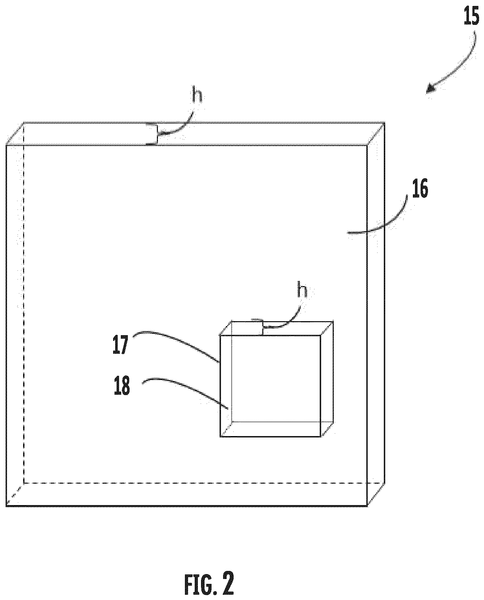

Referring now to FIG. 2, the first portion 15 is schematically depicted having a height (h) and a first cross-section 16, wherein the first cross-section 16 is perpendicular to a direction of the height (h) of the first portion 15. The first portion 15 also includes a sub-portion 17 having a height (h) equal to the height (h) of the first portion 15, and a second cross-section 18, wherein the second cross-section 18 is perpendicular to a direction of the height (h) of the sub-portion 17. In embodiments, the height (h) of the first portion 15 and the height (h) of the sub-portion 17 are about 1.0 mm. In embodiments, the sub-portion 17 has a length of 40.0 mm and a width of 40.0 mm. The sub-portion 17 may be positioned at any region relative to the first portion 15 such that the entire second cross-section 18 of the sub-portion 17 is overlapping with the cross-section 16 of the first portion 15.

In embodiments, the first cross-section 16 has a first cross-section area. In embodiments, the first cross-section area is greater than or equal to about $50.0 \text{ cm}^2$, such as greater than or equal to about $75.0 \text{ cm}^2$, greater than or equal to about $100.0 \text{ cm}^2$, greater than or equal to about $125.0 \text{ cm}^2$, or greater than or equal to about $150.0 \text{ cm}^2$. In embodiments, the first cross-section area may be from about $50.0 \text{ cm}^2$ to about $500.0 \text{ cm}^2$, from about $50.0 \text{ cm}^2$ to about $400.0 \text{ cm}^2$, from about $50.0 \text{ cm}^2$ to about $300.0 \text{ cm}^2$, from about $50.0 \text{ cm}^2$ to about $200.0 \text{ cm}^2$, from about $75.0 \text{ cm}^2$ to about $500.0 \text{ cm}^2$, from about $75.0 \text{ cm}^2$ to about $400.0 \text{ cm}^2$, from about $75.0 \text{ cm}^2$ to about $300.0 \text{ cm}^2$, from about $75.0 \text{ cm}^2$ to about $200.0 \text{ cm}^2$, from about $100.0 \text{ cm}^2$ to about $500.0 \text{ cm}^2$, from about $100.0 \text{ cm}^2$ to about $400.0 \text{ cm}^2$, from about $100.0 \text{ cm}^2$ to about $300.0 \text{ cm}^2$, from about $100.0 \text{ cm}^2$ to about $200.0 \text{ cm}^2$, from about $150.0 \text{ cm}^2$ to about $500.0 \text{ cm}^2$, from about $150.0 \text{ cm}^2$ to about $400.0 \text{ cm}^2$, from about $150.0 \text{ cm}^2$ to about $300.0 \text{ cm}^2$, or from about $150.0 \text{ cm}^2$ to about $200.0 \text{ cm}^2$.

As discussed above with reference to FIGS. 1A, 1B, and 2, the glass substrate 10 may include a first portion 15 having a height (h) of 1.0 mm and a first cross-section 16, wherein the first cross-section 16 is perpendicular to the direction of the height (h) of the first portion 15. Although the first portion 15 is depicted as being uniformly positioned at a specific height (H) of the glass substrate 10, and having a cross section with an area equal to a cross-section of the glass substrate 10 in FIGS. 1A and 1B, it is contemplated that the first portion 15 may be positioned at any orientation within the glass substrate 10 such that the height (h) of the first portion 15 is 1.0 mm, the first cross-section 16 is perpendicular to a direction of the height (h) of the first portion 15, and the first cross-section 16 has a first-cross section area, as described herein.

The glass substrate 10 may be a silica-based glass. The silica-based glass may be a titania-doped silica glass. In embodiments, the silica-based glass of the glass substrate 10 may be produced from precursors, which may include but are not limited to octamethylcyclotetrasiloxane, titanium tetraisopropoxide, or combinations thereof. The silica-based glass of the glass substrate 10 may further comprise one or more additional modifiers and/or additives. In embodiments, the glass substrate 10 may comprise a mass of the silica-based glass having a weight of from about 100 grams to about 1.0 kilograms. In embodiments, the glass substrate 10 may comprise a mass of the silica-based glass having a weight of greater than or equal to about 1.0 kilogram.

The silica-based glass of the glass substrate 10 may comprise a silica ($SiO_2$) concentration of greater than or equal to about 80.0 mole percent (mol.%), such as greater than or equal to about 85.0 mol.%, greater than or equal to about 90.0 mol.%, greater than or equal to about 92.0 mol.%, greater than or equal to about 95.0 mol.%, greater than or equal to about 98.0 mol.%, or greater than or equal to about 99.0 mol.% silica, based on the total moles of the silica-based glass. In embodiments, the silica-based glass of the glass substrate 10 may comprise a silica concentration of from about 85.0 mol.% to less than or equal to 100.0 mol.%, from about 87.0 mol.% to about 97.0 mol.%, from about 90.0 mol.% to about 95.0 mol.%, or from any and all ranges and sub-ranges between the foregoing values, based on the total moles of the silica-based glass.

In embodiments, the silica-based glass of the glass substrate 10 may comprise titania ($TiO_2$). The silica-based glass of the glass substrate 10 may comprise a $TiO_2$ concentration of greater than or equal to 0.0 wt.% to less than or equal to about 15.0 wt.%, such as greater than or equal to less than or equal to about 1.0 wt.% to less than or equal to about 14.0 wt.%, greater than or equal to about 2.0 wt.% to less than or equal to about 13.0 wt.%, greater than or equal to about 3.0 wt.% to less than or equal to about 12.0 wt.%, greater than or equal to about 4.0 wt.% to less than or equal to about 11.0 wt.%, greater than or equal to about 5.0 wt.% to less than or equal to about 10.0 wt.%, greater than or equal to about 6.0 wt.% to less than or equal to about 9.0 wt.%, greater than or equal to about 7.0 wt.% to less than or equal to less than or equal to about 8.0 wt.%, or any and all ranges and sub-ranges between the foregoing values, based on the total weight of the silica-based glass. In embodiments, the silica-based glass of the glass substrate 10 does not comprise titania.

The first portion 15 of the silica-based glass of the glass substrate 10 may have a more uniform hydroxyl group concentration across the sub-portion 17 relative to conventional silica-based glasses. A peak-to-valley (P-V) difference of hydroxyl group concentration within the sub-portion 17 of the first portion 15 may be determined according to the hydroxyl group concentration uniformity test method described herein, where the first portion 15 has a height (h) of 1.0 mm, the first cross-section 16 has the first cross-section area, the sub-portion 17 has a height (h) of about 1.0 mm, a length of about 40.0 mm, a width of about 40.0 mm, and where the peak-to-valley difference of hydroxyl group concentration of the sub-portion 17 is measured at the second cross-section 18. As used herein, the "peak-to-valley difference of hydroxyl group concentration" of the sub-portion 17 refers to the difference between the highest hydroxyl group concentration and the lowest hydroxyl group concentration of the sub-portion 17, as measured at the second cross-section 18, according to the hydroxyl group concentration uniformity test method described herein.

The peak to valley difference of the hydroxyl group concentration of the sub-portion 17 may be determined by Fourier Transform Infrared (FTIR) spectroscopy in transmission, according to the following test procedure. As used herein, "in transmission" means that the light is directed through the sub-portion 17 of the first portion 15 and measured after passing through the sub-portion 17 of the first portion 15 to determine the hydroxyl group concentration (rather than using light that is reflected from the substrate to be measured to determine the hydroxyl group concentration). Therefore, "in transmission" requires a non-scattering surface. The first portion 15 is prepared by sectioning the silica-based glass of the glass substrate 10 to form the first portion 15 having a thickness of about 1 mm and a first cross-section 16 having the first cross-section area, as described herein. A surface of the first portion 15 is prepared by polishing the surface of the first portion 15 such that 90% of collimated light passes through a normal angle without deviation of greater than 10 degrees off normal prior to measurement. The first-portion 15 is loaded into the FTIR instrument for measurement within the sub-portion 17 of the first portion 15 and a beam alignment and background measurement may be performed first. Then the FTIR instrument is used to measure the fundamental absorption band for hydroxyl groups centered near 3670 cm$^{-1}$ at a plurality of regions within the sub-portion 17 of the first portion 15. In the measurement, the absorption intensity of the hydroxyl absorption band relative to the background signal (baseline) is determined, where the background signal is defined as a straight line between the points of lowest intensity immediately surrounding the hydroxyl absorption peak. The peak hydroxyl absorption intensity is then divided by the thickness (h = 1.0 mm) of the sub-portion 17 to yield a hydroxyl absorption coefficient $\beta_{OH}$. The hydroxyl group concentration is then derived from the hydroxyl absorption coefficient $\beta_{OH}$ using Equation 1 (EQU. 1).

$$C = \left(\frac{\beta_{OH}}{\varepsilon}\right)\left(\frac{MW_{OH}}{D_{glass}}\right)x10^6 \qquad\qquad \text{EQU. 1}$$

In EQU. 1, C is the hydroxyl group concentration in parts per million (ppm) for a particular region of the sub-portion 17, $\beta_{OH}$ is the hydroxyl absorption coefficient of the glass, $\varepsilon$ is the molar absorptivity of the peak hydroxyl absorption intensity for the hydroxyl absorption band centered near 3670 cm$^{-1}$ (e.g. 77.5 L·mol$^{-1}$·cm$^{-1}$), $MW_{OH}$ is the molecular weight of hydroxyl (17 g/mol), and $D_{glass}$ is the density of glass (g/cm$^3$). It is noted that C refers to the average hydroxyl concentration of the particular region of the sub-portion 17. The above-disclosed FTIR analysis is further disclosed in K.M. Davis, et al, "Quantitative infrared spectroscopic measurement of hydroxyl group concentration in silica glass," J. Non-Crystalline Solids, 203 (1996) 27-36, which is incorporated by reference herein.

The hydroxyl group concentration is measured at a plurality of segments within the sub-portion 17 as described below. The difference between the highest hydroxyl group concentration and the lowest hydroxyl concentration among the plurality of segments is calculated and is referred to herein as the peak-to-valley (P-V) difference of the hydroxyl group concentration of the sub-portion 17. Gradients or uniformity in hydroxyl group concentration can be determined by comparing the hydroxyl group concentration measured for segments at different positions within sub-portion 17.

The P-V difference of the hydroxyl group concentration in the sub-portion 17 of the first portion 15 may be less than or equal to about 15.0 ppm, such as less than or equal to about 14.0 ppm, less than or equal to about 13.0 ppm, less than or equal to about 12.0 ppm, less than or equal to about 11.0 ppm, less than or equal to about 10.0 ppm, less than or equal to about 9.0 ppm, less than or equal to about 8.0 ppm, less than or equal to about 7.0 ppm, less than or equal to about 6.0 ppm, less than or equal to about 5.0 ppm, less than or equal to about 4.0 ppm, less than or equal to about 3.0 ppm, less than or equal to about 2.0 ppm, or less than or equal to about 1.0 ppm, where the sub-portion 17 has a height of about 1.0 mm, a length of about 40.0 mm, and a width of about 40.0 mm, and where the first portion 15 has a height of about 1.0 mm and the first cross-section 16 has the first cross-section area. In embodiments, the P-V difference of the hydroxyl group concentration in the sub-portion 17 may be greater than 0 ppm to about 15.0 ppm, from about 1.0 ppm to about 12.0 ppm, from about 2.0 ppm to about 10.0 ppm, from about 3.0 ppm to about 9.0 ppm, from about 4.0 ppm to about 8.0 ppm, from about 5.0 ppm to about 7.0 ppm, from about 5.0 ppm to about 6.0 ppm, or any and all ranges and sub-ranges between the foregoing values, where the sub-portion 17 has a height of about 1.0 mm, a length of about 40.0 mm, and a width of about 40.0 mm, and where the first portion 15 has a height of about 1.0 mm and the first cross-section 16 has the first cross-section area.

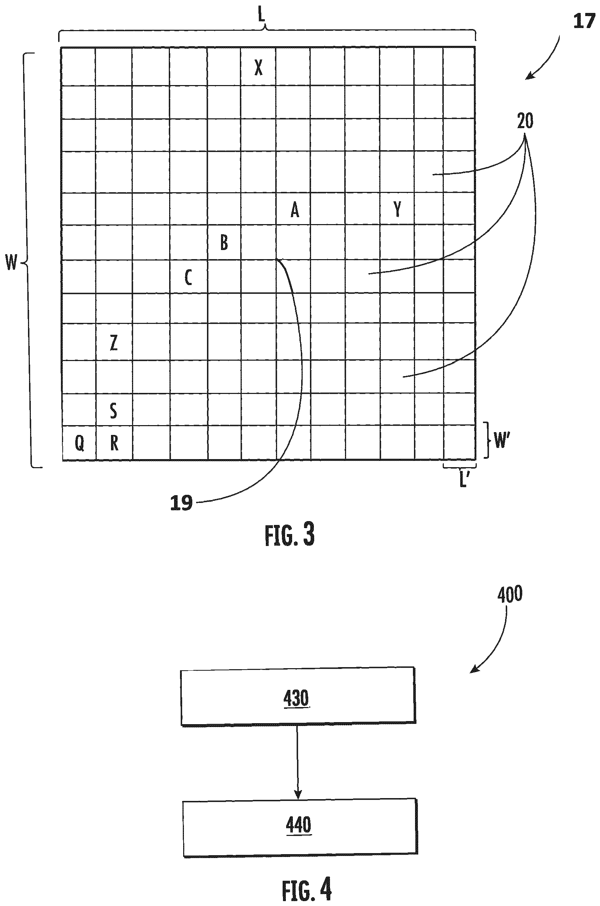

To determine the uniformity and P-V difference of the hydroxyl group concentration of the sub-portion 17, the sub-portion 17 is divided into segments across the length and width of the sub-portion 17. For instance, FIG. 3 shows the sub-portion 17 of FIG. 2 divided into segments 20 across the cross-sectional length (L) and width (W) of the sub-portion 17 of FIG. 1. The hydroxyl group concentration may be then determined for each segment 20 using FTIR as previously described herein. The hydroxyl group concentrations for each of the segments 20 can then be compared to determine the uniformity of the hydroxyl group concentration in the sub-portion 17. In particular, the concentration of hydroxyl groups may be measured for each segment 20 in order to identify the segments 20 with maximum and minimum hydroxyl group concentration across the sub-portion 17, which can then be used to determine the P-V difference of the hydroxyl group concentration of the sub-portion 17, as described herein.

As shown in FIG. 3, the segments 20 are adjacent segments across the entire length (L) and width (W) of the sub-portion 17. As discussed herein, the sub-portion 17 length (L) and the sub-portion 17 width (W) are each about 40.0 mm, and the sub-portion 17 height (h) is about 1.0 mm. The segments 20 are adjacent segments across the sub-portion 17 length (L) and the sub-portion 17 width (W) such that the segment length (L') and segment width (W') of the segments 20 are each about 5% of the sub-portion 17 length (L) and the sub-portion 17 width (W). The height of each segment 20 is equal to the height of the sub-portion 17.

As previously discussed, in embodiments, the P-V difference of the hydroxyl group concentration in the sub-portion 17 of the first portion 15 may be less than about 15.0 ppm, where the sub-portion 17 has a height of about 1.0 mm, a length of about 40.0 mm, and a width of about 40.0 mm, and where the first portion 15 has a height of about 1.0 mm and the first cross-section 16 has the first cross-section area. In embodiments, the hydroxyl group concentration of each of the segments 20 may be generally the same (e.g., each segment 20 may differ in average hydroxyl group concentration from every other segment within sub-portion 17 by less than about 15.0 ppm). In embodiments, one or more segments 20 may have a different hydroxyl group concentration from one or more other segments 20 such as having a P-V difference of the hydroxyl group concentration greater than 15.0 ppm for a sub-portion 17 where the sub-portion 17 has a height of about 1.0 mm, a length of about 40.0 mm, and a width of about 40.0 mm, and where the first portion 15 has a height of about 1.0 mm and the first cross-section 16 has the first cross-section area. In these embodiments, the hydroxyl group concentration of one or more of the segments 20 may be generally different (e.g., one or more segments 20 may differ from one or more other segments 20 by greater than about 15 ppm). In embodiments, segments 20 closer to a peripheral edge of the first portion 15 may have a greater hydroxyl group concentration than segments 20 closer to a center point of the first portion 15. For instance, referring again to FIG. 3, the sub-portion 17 may be positioned such that the center point 19 of the sub-portion 17 is at a center point of the first portion. In embodiments, segments Q, R, and S may each have a hydroxyl group concentration greater than the hydroxyl group concentration of segments A, B, and C and greater than segments X, Y, and Z.

In embodiments, the hydroxyl group concentration may have a gradient throughout or within the sub-portion 17, where the hydroxyl group concentration is lowest nearest the center point of the first portion 15 and increases with increasing distance from the center of the first portion 15. In these embodiments, the segments 20 may gradually increase in hydroxyl group concentration with increasing distance from the center point of the first portion 15. In embodiments, the segments nearest to the center point of the first portion 15 may have the lowest hydroxyl group concentration, and the segments nearest the peripheral edges of first portion 15 may have the greatest hydroxyl group concentration.

The hydroxyl concentration of each of segment 20 of the sub-portion 17 may be averaged to determine an average hydroxyl group concentration of the sub-portion 17. For example, the hydroxyl group concentration of each segment 20 may be measured (as discussed above) and these concentrations may be averaged to determine the average hydroxyl group concentration of the entirety of the sub-portion 17. For instance, in embodiments where the sub-portion 17 comprises 144 segments 20, the hydroxyl group concentrations of the 144 segments 20 may be averaged to determine the average hydroxyl group concentration of the entirety of the sub-portion 17.

In embodiments, the average hydroxyl group concentration of the entirety of sub-portion 17 may be greater than or equal to about 600 ppm, greater than or equal to about 700 ppm, or greater than or equal to about 800 ppm. In embodiments, the average hydroxyl group concentration of the sub-portion 17 may be from about 50 ppm to about 2000 ppm, from about 200 ppm to about 1900 ppm, from about 300 ppm to about 1800 ppm, from about 400 ppm to about 1700 ppm, from about 500 ppm to about 1750 ppm, from about 600 ppm to about 1600 ppm, from about 700 ppm to about 1500 ppm, from about 800 ppm to about 1400 ppm, from about 600 ppm to about 1500 ppm, from about 600 ppm to about 1400 ppm, from about 600 ppm to about 1300 ppm, from about 600 ppm to about 1200 ppm, from about 700 ppm to about 1000 ppm, from about 800 ppm to about 1000 ppm, or from any and all ranges and sub-ranges between the foregoing values.

In embodiments, the first portion 15 may comprise a first sub-portion and a second sub-portion. The first sub-portion and the second sub-portion may include any embodiments as described in reference to the sub-portion 17. For instance, in embodiments, the first sub-portion of the first portion of the silica-based glass may have a height of 1.0 mm, a length of 40.0 mm, a width of 40.0 mm, and a second cross-section, wherein the second cross-section is perpendicular to a direction of the height of the first sub-portion. In embodiments, the second sub-portion of the first portion of the silica-based glass may have a height of 1.0 mm, a length of 40.0 mm, a width of 40.0 mm, and a third cross-section, wherein the third cross-section is perpendicular to a direction of the height of the second sub-portion.

In embodiments, a center point of the second cross-section and a center point of the third cross-section may be separated by a horizontal separation distance. In embodiments, the horizontal separation distance may be greater than or equal to 5.0 mm, greater than or equal to 10.0 mm, greater than or equal to 15.0 mm, greater than or equal to 20.0 mm, greater than or equal to 25.0 mm, greater than or equal to 30.0 mm, greater than or equal to 35.0 mm, greater than or equal to 40.0 mm, greater than or equal to 45.0 mm, greater than or equal to 50.0 mm, greater than or equal to 55.0 mm, greater than or equal to 60.0 mm, greater than or equal to 65.0 mm, greater than or equal to 70.0 mm, greater than or equal to 75.0 mm, greater than or equal to 80.0 mm, greater than or equal to 85.0 mm, greater than or equal to 90.0 mm, greater than or equal to 95.0 mm, greater than or equal to 100.0 mm, greater than or equal to 105.0 mm, greater than or equal to 110.0 mm, greater than or equal to 115.0 mm, greater than or equal to 120.0 mm, greater than or equal to 125.0 mm, greater than or equal to 130.0 mm, greater than or equal to 135.0 mm, greater than or equal to 140.0 mm, greater than or equal to 145.0 mm, or greater than or equal to 150.0 mm. In embodiments, the horizontal separation distance may be less than or equal to 200.0 mm, less than or equal to 195.0 mm, less than or equal to 190.0 mm, less than or equal to 185.0 mm, less than or equal to 180.0 mm, less than or equal to 175.0 mm, less than or equal to 170.0 mm, less than or equal to 165.0 mm, less than or equal to 160.0 mm, less than or equal to 155.0 mm, less than or equal to 150.0 mm, less than or equal to 145.0 mm, less than or equal to 140.0 mm, less than or equal to 135.0 mm, less than or equal to 130.0 mm, less than or equal to 125.0 mm, less than or equal to 120.0 mm, less than or equal to 115.0 mm, less than or equal to 110.0 mm, less than or equal to 105.0 mm, less than or equal to 100.0 mm, less than or equal to 95.0 mm, less than or equal to 90.0 mm, less than or equal to 85.0 mm, less than or equal to 80.0 mm, less than or equal to 75.0 mm, less than or equal to 70.0 mm, less than or equal to 65.0 mm, less than or equal to 60.0 mm, less than or equal to 55.0 mm, less than or equal to 50.0 mm, less than or equal to 45.0 mm, less than or equal to 40.0 mm, less than or equal to 35.0 mm, less than or equal to 30.0 mm, less than or equal to 25.0 mm, less than or equal to 20.0 mm, less than or equal to 15.0 mm, or less than or equal to 10.0 mm.

An average hydroxyl concentration of the first sub-portion and an average hydroxyl concentration of the second sub-portion may be determined as described herein for determining the average hydroxyl group concentration of the sub-portion 17. In embodiments, an absolute value of a difference of an average hydroxyl group concentration of the first sub-portion, as measured at the second cross-section, and an average hydroxyl group concentration of the second sub-portion, as measured at the third cross-section, may be less than or equal to 15.0 ppm. For instance, in embodiments, the absolute value of the difference of the average hydroxyl group concentration of the first sub-portion, as measured at the second cross-section, and the average hydroxyl group concentration of the second sub-portion, as measured at the third cross-section may be less than or equal to about 15.0 ppm, less than or equal to about 14.0 ppm, less than or equal to about 13.0 ppm, less than or equal to about 12.0 ppm, less than or equal to about 11.0 ppm, less than or equal to about 10.0 ppm, less than or equal to about 9.0 ppm, less than or equal to about 8.0 ppm, less than or equal to about 7.0 ppm, less than or equal to about 6.0 ppm, less than or equal to about 5.0 ppm, less than or equal to about 4.0 ppm, less than or equal to about 3.0 ppm, less than or equal to about 2.0 ppm, or less than or equal to about 1.0 ppm,

In embodiments, the glass substrate 10 may comprise a second portion in addition to the first portion 15. In embodiments, the second portion may include any embodiments as described in reference to the first portion 15. For instance, the second portion may have a height of 1.0 mm and a fourth cross-section perpendicular to a direction of the height of the second portion, and the fourth cross-section may include any embodiments as described in reference to the second cross-section 18. In embodiments, the second portion may include a third sub-portion having a fifth cross-section, wherein the fifth-cross section is perpendicular to a direction of the height of the third sub-portion. The third sub-portion may include any embodiments as described in reference to the sub portion 17.

In embodiments, the third sub-portion of the second portion and the first sub-portion of the first portion 15 may be parallel and separated by a vertical separation distance. In embodiments, the vertical separation distance may be greater than or equal to 1.0 mm, greater than or equal to 2.0 mm, greater than or equal to 3.0 mm, greater than or equal to 4.0 mm, greater than or equal to 5.0 mm, greater than or equal to 6.0 mm, greater than or equal to 7.0 mm, greater than or equal to 8.0 mm, greater than or equal to 9.0 mm, or greater than or equal to 10.0 mm. In embodiments, the vertical separation distance may be less than or equal to 20.0 mm, less than or equal to 19.0 mm, less than or equal to 18.0 mm, less than or equal to 17.0 mm, less than or equal to 16.0 mm, less than or equal to 15.0 mm, less than or equal to 14.0 mm, less than or equal to 13.0 mm, less than or equal to 12.0 mm, less than or equal to 11.0 mm, less than or equal to 10.0 mm, less than or equal to 9.0 mm, less than or equal to 8.0 mm, less than or equal to 7.0 mm, less than or equal to 6.0 mm, less than or equal to 5.0 mm, less than or equal to 4.0 mm, or less than or equal to 3.0 mm.

An average hydroxyl concentration of the first sub-portion and an average hydroxyl concentration of the third sub-portion may be determined as described herein for determining the average hydroxyl group concentration of the sub-portion 17. In embodiments, an absolute value of a difference of an average hydroxyl group concentration of the first sub-portion, as measured at the second cross-section, and an average hydroxyl group concentration of the third sub-portion, as measured at the fifth cross-section, may be less than or equal to 15.0 ppm. For instance, in embodiments, the absolute value of the difference of the average hydroxyl group concentration of the first sub-portion, as measured at the second cross-section, and the average hydroxyl group concentration of the third sub-portion, as measured at the fifth cross-section may be less than or equal to about 15.0 ppm, less than or equal to about 14.0 ppm, less than or equal to about 13.0 ppm, less than or equal to about 12.0 ppm, less than or equal to about 11.0 ppm, less than or equal to about 10.0 ppm, less than or equal to about 9.0 ppm, less than or equal to about 8.0 ppm, less than or equal to about 7.0 ppm, less than or equal to about 6.0 ppm, less than or equal to about 5.0 ppm, less than or equal to about 4.0 ppm, less than or equal to about 3.0 ppm, less than or equal to about 2.0 ppm, or less than or equal to about 1.0 ppm.

The uniformity of the titania, if present, in the silica-based glass of the glass substrate 10 may also be determined. Refractive index variations correlate to $TiO_2$ concentration variations. In addition, variations in refractive index within the silica-based glass correlate with variations in CTE within the substrate. Thus, the higher the refractive index variation, the less uniformly the silica-based glass expands as the silica-based glass increases in temperature (and the less uniformly the silica-based glass contracts as the substrate decreases in temperature).

The refractive index variation within the sub-portion 17 having a height (h) of 1 mm, a length of 40.0 mm, and a width of 40.0 mm may be measured using an optical interferometer. As used herein, the term "refractive index variation" refers to the maximal variation of refractive indices measured in a plane perpendicular to the optical axis of the sample of the silica-based glass along a predetermined direction. For instance, the refractive index may be measured using a Zygo Verifire HD from Zygo Corporation with a 270 micron pixel size resolution operating at a wavelength of 633 nm. The optical interferometer may be set so that the pixels are square with a size of 270 microns x 270 microns, and each pixel extends through the full thickness (h) of the sub-portion 17 (about 1.0 mm). For each sampling area, an average refractive index measurement over the full thickness of the sub-portion 17 may be obtained. The sampling area may be scanned across the full surface of the sample to obtain a series of local refractive index values that are used to determine the maximal variation of refractive index, which is defined as the difference between the maximum and minimum refractive index values obtained in the series of measurements. The refractive index variation may be determined for each segment 20, and may be determined for the entire sub-portion 17. Interferometry at about 633 nm (He-Ne laser) has been shown to be useful in providing maps of the refractive index variation across the sample. As is typically done by one skilled in the art, when discussing refractive index variation along a certain direction, tilt and piston are subtracted. Therefore, the refractive index variation along a certain direction (such as the radial direction of the sample) in the meaning of the present disclosure does not include tilt or piston. In preparation of the interferometry measurement, the sample of the sub-portion 17 is thermally stabilized. The surfaces of the sub-portion 17 are either polished or made transparent by utilizing index-matching oil. The surface shapes of all optics in the interferometer cavity and the refractive index variations of the sample will result in a total wavefront distortion measured by the interferometer.

The titania concentration variation of each segment 20, if present, may be determined based upon the refractive index variation of each segment 20 using the relationship in Equation 2 (EQU. 2).

$$55 \text{ ppm } \Delta RI = 0.0125\% \ \Delta C_{Ti} \qquad\qquad EQU. \ 2$$

In EQU. 2, $\Delta RI$ is the refractive index variation of each segment 20 at a wavelength of 633 nm, relative to the average refractive index of the segment 20, and $\Delta C_{Ti}$ is the variation of concentration of titania (in wt.%) of each segment 20, relative to the average titania concentration of the segment 20. It is noted that the above relationship in EQU. 2 assumes that the only influence on the change of refractive index is from titania.

The difference between the highest titania concentration and the lowest titania concentration among the plurality of segments 20 is calculated and is referred to herein as the peak-to-valley (P-V) difference of the titania concentration. Gradients or uniformity in titania concentration can be determined by comparing the average titania concentration measured for segments at different positions within the sub-portion 17.

The P-V difference of the titania concentration in the sub-portion 17 of the first portion 15 may be less than or equal to about 100 ppm, such as less than or equal to about 75 ppm, less than or equal to about 50 ppm, less than or equal to about 25 ppm, or less than or equal to about 10 ppm, where the sub-portion 17 has a height of about 1.0 mm, a length of about 40.0 mm, and a width of about 40.0 mm, and where the first portion 15 has a height of about 1.0 mm and the first cross-section 16 has the first cross-section area. In embodiments, the P-V difference of the titania concentration in the sub-portion 17 of the first portion 15 may be greater than 0 ppm to about 10 ppm, from about 5 ppm to 100 ppm, from about 5 ppm to about 75 ppm, from about 5 ppm to about 50 ppm, from about 5 ppm to about 25 ppm, from about 5 ppm to about 10 ppm, from about 10 ppm to about 100 ppm, from about 10 ppm to about 75 ppm, from about 10 ppm to about 50 ppm, from about 10 ppm to about 25 ppm, from about 25 ppm to about 100 ppm, from about 25 ppm to about 75 ppm, or from about 25 ppm to about 50 ppm, where the sub-portion 17 has a height of about 1.0 mm, a length of about 40.0 mm, and a width of about 40.0 mm, and where the first portion 15 has a height of about 1.0 mm and the first cross-section 16 has the first cross-section area.

To determine the uniformity and P-V difference of the titania concentration of the sub-portion 17, the sub-portion 17 is divided into segments 20 across the length and width of the sub-portion 17, as disclosed in reference to the uniformity of the hydroxyl group concentration and FIG. 3. The titania concentration variation may be then determined for each segment 20 using EQU. 2 as previously described herein. The titania concentration variation for each of the segments 20 can then be compared to determine the uniformity of the titania concentration over the sub-portion 17. In particular, the titania concentration variation may be measured for each segment 20 to identify the segments 20 having the maximum and minimum average titania concentration across the sub-portion 17, which can be used to determine the P-V difference of the titania concentration of the sub-portion 17, as described herein.

The titania concentration variation of the segments 20 may be averaged together to determine an average titania concentration variation of the sub-portion 17. For example, the titania concentration variation of each segment 20 is measured (as discussed above) and these variations are averaged to determine the average titania concentration variation of the entirety of the sub-portion 17. For instance, in embodiments when the sub-portion 17 comprises 144 segments 20, the titania concentration variation of the 144 segments 20 are averaged to determine the average titania concentration variation of the entirety of the sub-portion 17.

Conventional methods known in the mart may be used to determine an average titania concentration of the sub-portion 17. In embodiments, the average titania concentration of the entirety of the sub-portion 17 may be from 0 wt.% to about 15.0 wt.%, such as from about 1.0 wt.% to about 14.0 wt.%, from about 2.0 wt.% to about 13.0 wt.%, from about 3.0 wt.% to about 12.0 wt.%, from about 4.0 wt.% to about 11.0 wt.%, from about 5.0 wt.% to about 10.0 wt.%, from about 6.0 wt.% to about 9.0 wt.%, from about 7.0 wt.% to about 8.0 wt.%, or from any and all ranges and sub-ranges between the foregoing values, based on the total weight of the sub-portion 17. In embodiments, the entirety of the sub-portion 17 does not comprise titania.

The average Coefficient of Thermal Expansion (CTE) of each segment 20 may also be determined from the refractive index variation of each segment 20 using the relationship in Equation 3 (EQU. 3).

$$55 \text{ ppm } \Delta\text{RI} = 1 \text{ ppb/K } \Delta\text{CTE} \qquad\qquad \text{EQU. 3}$$

In EQU. 3, $\Delta$RI is the refractive index variation of each segment 20, and $\Delta$CTE is the coefficient of thermal expansion variation (in $K^{-1}$) of each segment 20. It is noted that the above relationship assumes that the only influence on the change of refractive index is from CTE. In embodiments, the CTE at 20 °C is greater than or equal to about -45.0 ppb/K to less than or equal to about 20.0 ppb/K.

Additionally, the temperature at which the CTE is equal to zero, known as the zero crossover temperature (Tzc), of each segment 20 is determined from the CTE slope of each segment 20 using the relationship in Equation 4 (EQU. 4).

$$(\Delta\text{CTE}) / (\text{CTE slope}) = \Delta\text{Tzc} \qquad\qquad \text{EQU. 4}$$

In EQU. 4, $\Delta$CTE is the CTE variation for a particular segment 20 (in ppb/K), CTE slope is the slope of CTE of the segment 20 as a function of temperature (in $ppb/K^2$), and $\Delta$Tzc is the difference of the Tzc for the particular segment 20 and the average Tzc of all the segments 20 (°C). It is noted that the above relationship assumes that the only influence on the change of Tzc is from CTE. In embodiments, the CTE slope at 20 °C may be from about 1.0 $ppb/K^2$ to about 2.5 $ppb/K^2$, from about 1.15 $ppb/K^2$ to about 2.0 $ppb/K^2$, from about 1.2 $ppb/K^2$ to about 1.9 $ppb/K^2$, or from about 1.3 $ppb/K^2$ to about 1.7 $ppb/K^2$.

In embodiments, the silica-based glass of the glass substrate 10 may be high purity fused silica (HPFS). In embodiments, the hydroxyl group concentration of HPFS may be determined according to EQU. 1, as described herein.

Referring now to FIG. 4, a method 400 of forming the glass substrate 10 according to embodiments disclosed herein is depicted. As previously discussed, the glass substrate 10 may be a silica-based glass. The method 400 may be used to form a silica-based glass with a distribution of hydroxyl group concentration, as discussed above. The method 400 may comprise heating a molded precursor mass, where the heating comprises exposing the molded precursor mass to a consolidation environment having a consolidation temperature, the consolidation environment containing steam, at step 430, and maintaining the molded precursor mass in the consolidation environment while reducing the consolidation temperature, at step 440. Heating the molded precursor mass may increase a density of the molded precursor mass.

As shown in the method 400 of FIG. 4, the method may comprise heating a molded precursor mass, where the heating comprises exposing the molded precursor mass to a consolidation environment having a consolidation temperature, the consolidation environment containing steam, at step 430. In embodiments, the molded precursor mass comprises soot particles. The soot particles may comprise silica and greater than or equal to 0 wt.% titania and less than or equal to about 15.0 wt.% titania, based on the total weight of the soot particles. The soot particles may comprise from about 85 wt.% to less than or equal to 100 wt.% silica, based on the total weight of the soot particles. The molded precursor mass may have an initial density, which is the density of the molded precursor mass prior to the heating. In embodiments, the initial density of the molded precursor mass may be less than or equal to about 1.50 grams per centimeters cubed ($g/cm^3$), such as less than or equal to about 1.40 $g/cm^3$, less than or equal to about 1.30 $g/cm^3$, less than or equal to about 1.20 $g/cm^3$, less than or equal to about 1.10 $g/cm^3$, less than or equal to about 1.00 $g/cm^3$, or less than or equal to about 0.90 $g/cm^3$. In embodiments, the initial density of the molded precursor mass may be greater than or equal to about 0.50 $g/cm^3$, greater than or equal to about 0.60 $g/cm^3$, or greater than or equal to about 0.70 $g/cm^3$. In embodiments, the initial density of the molded precursor mass may be greater than or equal to about 0.50 $g/cm^3$ and less than or equal to about 1.50 $g/cm^3$, greater than or equal to about 0.60 $g/cm^3$ and less than about 1.50 $g/cm^3$, greater than or equal to about 0.70 $g/cm^3$ and less than about 1.50 $g/cm^3$, greater than or equal to about 0.50 $g/cm^3$ and less than or equal to about 1.40 $g/cm^3$, greater

than or equal to about 0.50 g/cm$^3$ and less than or equal to about 1.30 g/cm$^3$, greater than or equal to about 0.50 g/cm$^3$ and less than or equal to about 1.20 g/cm$^3$, greater than or equal to about 0.50 g/cm$^3$ and less than or equal to about 1.10 g/cm$^3$, greater than or equal to about 0.50 g/cm$^3$ and less than or equal to about 1.00 g/cm$^3$, or greater than or equal to about 0.50 g/cm$^3$ and less than or equal to about 0.90 g/cm$^3$, or from any and all ranges and sub-ranges between the foregoing values.

In embodiments, the exposing the molded precursor mass to a consolidation environment having a consolidation temperature, at step 430, may comprise maintaining the molded precursor mass in the consolidation environment for a time sufficient to increase the density of the molded precursor mass from the initial density to a threshold density. In embodiments, the threshold density is greater than the initial density of the molded precursor mass and less than about 2.00 g/cm$^3$. In embodiments, the threshold density may be greater than or equal to about 0.80 g/cm$^3$ and less than about 2.00 g/cm$^3$, greater than or equal to about 0.90 g/cm$^3$ and less than about 2.00 g/cm$^3$, greater than or equal to about 1.00 g/cm$^3$ and less than or equal to about 1.80 g/cm$^3$, greater than or equal to about 1.10 g/cm$^3$ and less than or equal to about 1.70 g/cm$^3$, greater than or equal to about 1.20 g/cm$^3$ and less than or equal to about 1.60 g/cm$^3$, greater than or equal to about 1.30 g/cm$^3$ and less than about 1.50 g/cm$^3$, or from any and all ranges and sub-ranges between the foregoing values. As is known in the art, the variation of the density of the molded precursor mass with heating rate, time and temperature of consolidation can be determined experimentally. Such experiments can be used to develop models and correlations of density with process conditions used in preliminary thermal treatment and consolidation. Once developed, the models can be used to identify the point in the process at which the molded precursor mass reaches the threshold density.

In embodiments, the exposing the molded precursor mass to a consolidation environment having a consolidation temperature at step 430 may comprise subjecting the molded precursor mass to a consolidation environment into which steam is introduced to achieve a partial pressure of steam within the consolidation environment of from greater than or equal to about 0.10 kilopascals (kPa) and less than or equal to about 1,000 kPa. In embodiments, the molded precursor mass may be placed into a furnace providing the consolidation environment. The furnace may comprise air, an inert gas, or both at an elevated temperature prior to subjecting the molded precursor mass to steam to purge and remove at least a portion of gases present within the molded precursor mass.

In embodiments, the consolidation environment may comprise greater than or equal to about 50.0 volume percent (vol.%), greater than or equal to about 60.0 vol.%, greater than or equal to about 70.0 vol.%, greater than or equal to about 80.0 vol.%, greater than or equal to about 90.0 vol.%, greater than or equal to about 95.0 vol.%, greater than or equal to about 99.0 vol.%, or about 100 vol.% steam, based on a total volume of gases in the consolidation environment.

In embodiments, the consolidation environment may comprise greater than or equal to about 0.0 vol.%, greater than or equal to about 10.0 vol.%, greater than or equal to about 20.0 vol.%, greater than or equal to about 30.0 vol.%, or greater than or equal to about 40.0 vol.% inert gas, based on a total volume of gases in the consolidation environment. In embodiments, the consolidation environment may comprise less than or equal to 50.0 vol.%, less than or equal to 40.0 vol.%, less than or equal to 30.0 vol.%, less than or equal to 20.0 vol.%, less than or equal to 10.0 vol.%, less than or equal to 5.0 vol.%, or less than or equal to 1.0 vol.% inert gas, based on a total volume of gases in the consolidation environment.

In embodiments, the consolidation environment may comprise greater than or equal to about 0.0 vol.%, greater than or equal to about 10.0 vol.%, greater than or equal to about 20.0 vol.%, greater than or equal to about 30.0 vol.%, or greater than or equal to about 40.0 vol.% air, based on a total volume of gases in the consolidation environment. In embodiments, the consolidation environment may comprise less than or equal to 50.0 vol.%, less than or equal to 40.0 vol.%, less than or equal to 30.0 vol.%, less than or equal to 20.0 vol.%, less than or equal to 10.0 vol.%, less than or equal to 5.0 vol.%, or less than or equal to 1.0 vol.°7o air, based on a total volume of gases in the consolidation environment.

The heating may include a preliminary thermal treatment, which may be conducted in a steam-free atmosphere at a temperature in a range of from about 100 °C to about 900 °C, from about 200 °C to about 800 °C, or from about 300 °C to about 700 °C. The preliminary thermal treatment may be conducted for an amount of time sufficient to increase an average internal temperature of the molded precursor mass to at least about 100 °C, at least about 200 °C, or in a range from about 100 °C to about 900 °C, or about 800 °C. Additional embodiments of the above-disclosed steam consolidation process are disclosed in U.S. Patent No. 9,580,350, which is incorporated by reference in its entirety.

After the preliminary thermal treatment, the molded precursor mass may then be exposed to a steam-containing loading atmosphere to load the molded precursor mass with hydroxyl groups. In embodiments, the molded precursor mass is at the temperature of the preliminary thermal treatment when exposed to the steam-containing loading atmosphere. The environment within the furnace may be changed to steam by flowing steam to achieve a partial pressure of steam within the furnace of up to about 1,000 kPa, such as a pressure of from about 0.10 kPa to about 1,000 kPa, from about 50 kPa to about 500 kPa, from about 70 kPa to about 250 kPa, from about 90 kPa to about 130 kPa, or from about 0.10 kPa to about 100 kPa. After exposure of the molded precursor mass to the steam-containing loading atmosphere, the molded precursor mass can be consolidated in the presence of steam. The consolidation environment may have the same composition as the steam-containing loading atmosphere (as described above). Consolidation of the molded precursor mass in the consolidation environment may be conducted at a consolidation temperature for a consolidation time that is sufficient to transform the glass substrate from a porous body to a body having closed pores. The consolidation temperature is preferably greater than the temperature of the preliminary thermal treatment. The consolidation environment may include only steam or steam in combination with an inert gas. In embodiments, the consolidation environment may comprise a partial pressure of steam of from about 0.10 kPa to about 1,000 kPa, from about 50 kPa to about 500 kPa, from about 70 kPa to about 250 kPa, from about 90 kPa to about 130 kPa, from about 0.10 kPa to about 100 kPa, or from any and all ranges and sub-ranges between the foregoing values.

In embodiments, the consolidation temperature may be from about 900 °C to about 1300 °C, such as from about 1000 °C to about 1200 °C. In embodiments, the consolidation may be continued for a consolidation time of from about 10 hours to about 300 hours, such as from about 50 hours to about 200 hours.

In embodiments, the heating may comprise increasing the consolidation temperature at a heating rate of from about 0.50 °C to about 100 °C per hour, such as from about 0.50 °C to about 50 °C per hour, from about 0.50 °C to about 10 °C per hour, or from about 0.50 °C to about 5.0 °C per hour for a first duration of time. The first duration of time may be from about 10 hours to about 100 hours. In embodiments, the temperature of the furnace is increased from the temperature of the preliminary thermal treatment to the consolidation temperature at the heating rate.

As shown in the method 400 of FIG. 4, the method may comprise heating the molded precursor mass, where the heating comprises maintaining the molded precursor mass in the consolidation environment while reducing the consolidation temperature, at step 440. In embodiments, maintaining the molded precursor mass in the consolidation environment while reducing the consolidation temperature increases the density of the molded precursor mass from the threshold density to a final density.

In embodiments, maintaining the molded precursor mass in the consolidation environment while reducing the consolidation temperature at step 440 may comprise reducing the consolidation temperature at a rate of from about 0.010 °C per hour to about 5.00 °C per hour for a second duration of time, such as from about 0.010 °C per hour to about 2.50 °C per hour, from about 0.010 °C per hour to about 2.00 °C per hour, from about 0.010 °C per hour to about 1.50 °C per hour, from about 0.010 °C per hour to about 1.00 °C per hour, from about 0.010 °C per hour to about 0.50 °C per hour, or from about 0.010 °C per hour to about 0.250 °C per hour. In embodiments, the second duration of time may be from about 10 hours to about 100 hours. Without intending to be bound by any particular theory, it is believed that maintaining the molded precursor mass in the consolidation environment while reducing the consolidation temperature produces a temperature gradient in the molded precursor mass, wherein the molded precursor mass has a higher temperature at the center of the molded precursor mass than at the outer portions of the molded precursor mass. While not wishing to be bound by theory, the temperature gradient is believed to arise because as the consolidation temperature is decreased, the outer and peripheral portions of the molded precursor mass cool more quickly than the inner portions of the molded precursor mass due to time scales based on thermal conductivity of heat from the inner portions to the outer portions. The temperature gradient is believed to facilitate uniformity of hydroxyl concentration in the molded precursor mass by suppressing loss of hydroxyl groups from the outer or peripheral portions relative to the inner portions. Loss of hydroxyl groups is influenced primarily by the strength of association of hydroxyl groups to the molded precursor mass and diffusion of hydroxyl groups through the pores of the molded precursor mass. At high temperature, dissociation of hydroxyl groups from the molded precursor mass increases. This effect holds throughout the molded precursor mass. Once dissociated, however, loss of hydroxyl groups is controlled by diffusion of hydroxyl groups to the outside surface of the molded precursor mass. Longer distances for diffusion are required for hydroxyl groups present in the inner portions of the molded precursor mass than for the outer and peripheral portions of the molded precursor mass. At early stages of consolidation (e.g., at densities below the threshold density), pores and internal channels of the molded precursor mass are sufficiently open that hydroxyl diffusion occurs readily even from inner portions of the molded precursor mass. As consolidation increases, pores and internal channels begin to collapse and barriers to hydroxyl diffusion arise that inhibit hydroxyl diffusion from inner portions of the molded precursor mass relative to outer portions of the molded precursor mass. As a result, when consolidating at a constant temperature, preferential loss of hydroxyl groups from the outer or peripheral portions of the molded precursor mass occurs. This effect is compensated for or offset by the process of the present disclosure. By reducing the consolidation temperature when the molded precursor mass approaches or reaches the threshold density and establishing a temperature gradient in which the temperature of the outer or peripheral portions of the molded precursor mass is less than the temperature of the inner portions, dissociation of hydroxyl groups from the outer or peripheral portions is suppressed relative to the inner portions. So even though hydroxyl diffusion from the outer or peripheral portions is favored relative to the inner portions, the supply of hydroxyl groups is diminished and a more uniform distribution of hydroxyl groups is established. A reduction in the peak-to-valley difference in hydroxyl group concentration results.

In embodiments, exposing the molded precursor mass to a consolidation environment having a consolidation temperature at step 430 may comprise holding the molded precursor mass at a constant consolidation temperature (i.e., a holding temperature) for a pre-determined amount of time prior to the maintaining the molded precursor mass in the consolidation environment while reducing the consolidation temperature at step 440. The holding temperature may be from about 1000 °C to about 1250 °C, or about 1150 °C to about 1200 °C. The molded precursor mass may be held at the holding temperature for a duration of from about 1 hour to about 240 hours, or from about 5 hours and about 20 hours. In embodiments, the molded precursor mass may be held at the holding temperature for a holding duration prior to increasing the consolidation temperature. In embodiments, the molded precursor mass may be held at a holding temperature for a holding duration after the increasing the consolidation temperature and prior to the decreasing the consolidation temperature. In embodiments, the molded precursor mass is held at the holding temperature for a time sufficient to increase the density of the molded precursor mass to the threshold density.

In embodiments, the profile of the hydroxyl group concentration of the glass substrate 10 may be tuned by changing the consolidation temperature at step 430, changing the threshold density at step 430, and/or changing the rate at which the consolidation temperature is reduced at step 440 to produce the glass substrate 10 having a desired profile of the hydroxyl group concentration.

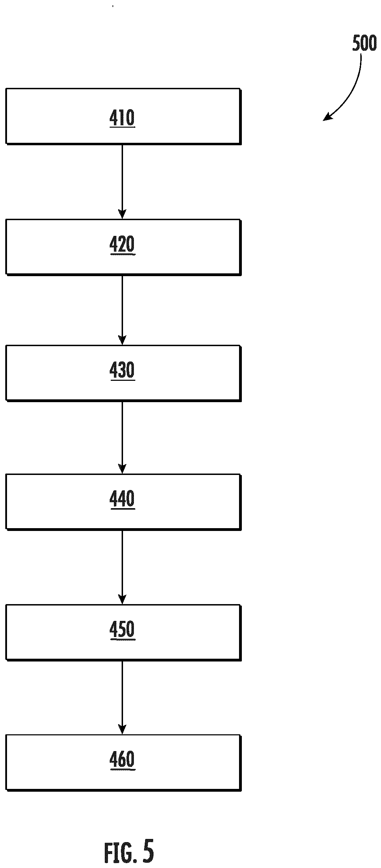

Referring now to FIG. 5, a method 500 of forming the glass substrate 10 according to embodiments disclosed herein is depicted. As previously discussed, the glass substrate 10 may be a silica-based glass. The method 500 may be used to form a glass substrate with a relatively uniform distribution of hydroxyl group concentration, as discussed herein. Method 500 may comprise forming soot particles as loose soot particles, at step 410; molding the soot particles into a molded precursor mass, at step 420; heating the molded precursor mass, where the heating comprises exposing the molded precursor mass to a consolidation environment having a consolidation temperature, at step 430, and maintaining the molded precursor mass in the consolidation environment while reducing the consolidation temperature, at step 440; melting the silica-based glass into a melt that flows into a mold, at step 450; and cooling the melt to form a silica-based glass, at step 460.

As shown in FIG. 5, the method 500 may comprise, prior to the exposing at step 430, forming soot particles as loose soot particles, at step 410. In embodiments, forming soot particles as loose soot particles may comprise combusting and oxidizing a mixture of a silica precursor and optionally, a titanium precursor to form loose soot particles. The soot particles may comprise from about 85 wt.% to less than or equal to 100 wt.% $SiO_2$ and from 0 wt.% to less than or equal to about 15 wt.% $TiO_2$, based on the total weight of the soot particles. The soot particles may be formed by any method known in the art.

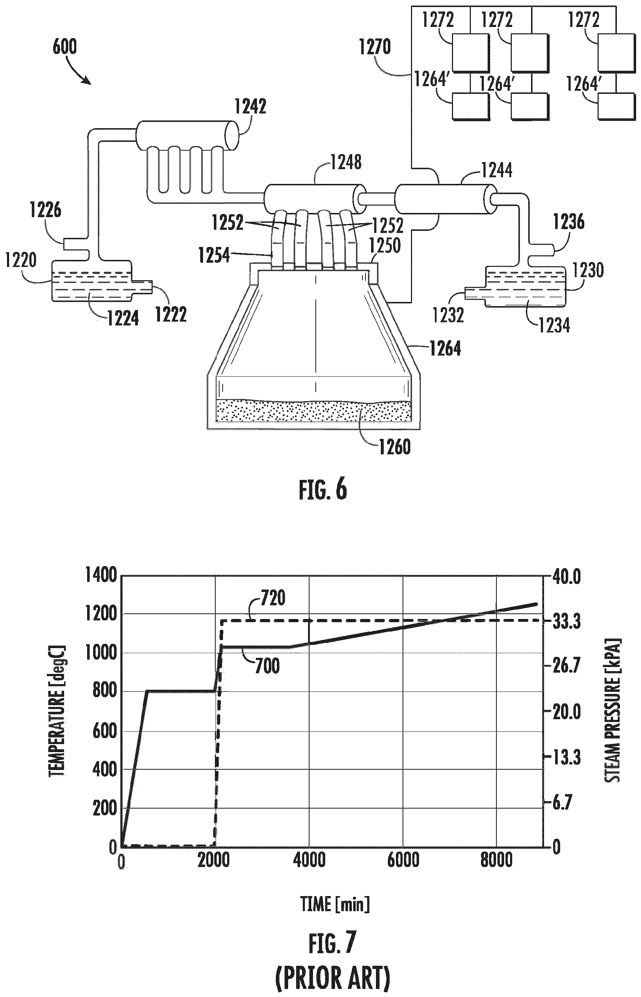

FIG. 6 depicts a schematic representation of one embodiment of a system 600 to produce loose soot particles at step 410. Referring to FIG. 6, system 600 may comprise a first reservoir 1220 that houses a silica precursor 1224 and a second reservoir 1230 that houses an optional titania precursor 1234, if present. The temperatures of first and second reservoirs 1220, 1230 may be monitored such that the precursors within each reservoir are uniform and constant (i.e., within +/-0.5°C) within the entirety of the reservoir. First reservoir 1220 may include an inlet 1222 for introduction of a carrier gas, such as nitrogen, at or near the base of the reservoir. The carrier gas forms a vaporous stream with the silica precursor 1224. Similarly, second reservoir 1230 may include an inlet 1232 for introduction of a carrier gas, such as nitrogen, at or near the base of the reservoir. The carrier gas in second reservoir 1230 may form a vaporous stream with the titania precursor 1234. The carrier gases flowing into inlets 1222, 1232 may flow into the respective reservoirs 1220, 1230 at a consistent and uniform flow rate in order to avoid introduction of any perturbations into system 600. More specifically, the carrier gases flowing into inlets 1222, 1232 may flow at a flow rate within 5% of each other.

The silica precursor 1224 may comprise, for example, octamethylcyclotetrasiloxane or $SiCl_4$, and the titania precursor 1234 may comprise titanium tetraisopropoxide or $TiCl_4$.

Bypass streams of carrier gas may also be introduced into system 600 at inlets 1226 and 1236 to prevent saturation of the vaporous silica stream and the vaporous titania stream. In embodiments, the vaporous silica stream and the vaporous titania stream may be heated by hot oil tracing to prevent hot and cold spots within the streams. It is noted that both hot and cold spots within a vaporous stream may affect the precursor concentrations in the stream, thus producing glass with suboptimal properties. The vaporous silica stream may then pass through distribution system 1242 to manifold 1248, and the vaporous titania stream may pass through distribution system 1244 to manifold 1248.

The silica and titania vaporous streams then may mix in manifold 1248 to form a mixture of the two streams. As further shown in FIG. 6, the mixture of the two streams may flow to furnace 1250. More specifically, the mixture of the two streams may pass through fume lines 1252 to burners 1254 mounted in an upper portion of furnace 1250. The two streams may be further joined with a fuel/oxygen mixture at burners 1254 to combust and oxidize the mixture. The fuel may be natural gas. The oxidation and combustion of the mixture may form loose soot particles 1260. The fuel/oxygen mixture may be combined with the silica and titania vaporous streams at burners 1254 such that the amount of oxygen is at least in a 1:1 ratio with the amount of silica and titania vapor combined (including any carrier gases). Therefore, the amount of oxygen may be at least equal to the amount of silica and titania vapor (including any carrier gases), or 2x, or 3x, or 4x, etc. the amount of silica and titania vapor (including any carrier gases).

The loose soot particles 1260 may then be cooled and directed into a collection chamber. In embodiments, the loose soot particles 1260 may be directed into collection chamber 1264. In embodiments, the loose soot particles 1260 may be directed vertically upward through a tube 1270 rather than downward into collection chamber 1264. Tube 1270 may be a quartz tube, which carries soot particles 1260 in a vaporous stream to one or more filter bags 1272. The soot particles 1260 may be removed from the vaporous stream by the filter bags 1272 and may then be deposited into one or more collection chambers 1264'. For example, the soot particles 1260 may fall downward from filter bags 1272 and into collection chambers 1264'. A pulse of $N_2$ may periodically be applied to filter bags 1272 to prevent the excess accumulation of soot particles 1260 on the bags. In embodiments, collection chambers 1264' may be stainless steel hoppers. The soot particles 1260 can then be further collected from collection chambers 1264' and deposited into barrels, where soot particles 1260 may be stored until further use. The weight percentage of the $TiO_2$ in the soot particles 1260 and glass-based substrates formed therefrom can be determined via X-ray fluorescence ("XRF").

In embodiments, the soot particles 1260 may cool to a temperature of about 200 °C or less, or about 175 °C or less, or about 150 °C or less, or about 125 °C or less, or about 100 °C or less, or about 75 °C or less, or about 50 °C or less, or about 25 °C or less, or about 20 °C or less before reaching collection chambers 1264, 1264'.

Referring again to FIG. 5, the method 500 may comprise, prior to the exposing at step 430, molding soot particles, such as those soot particles formed at step 410, into a molded precursor mass, at step 420. Molding soot particles may comprise transporting loose soot particles, such as the soot particles formed at step 410 to a mold. The mold may comprise graphite with a very high cleanliness level (i.e., an impurity level of less than 100 ppm) in order to produce the glass substrate 10 with superior properties. The mold may be shaped to impart the soot particles with a shape desired for the molded precursor mass. In embodiments, the soot particles may be pressed in the mold by a pressing apparatus to form the molded precursor mass. The pressing apparatus may be configured to press the soot particles to produce the molded precursor having a desired initial density. In embodiments, the pressing apparatus may be setup to produce the molded precursor mass having an initial density of greater than or equal to about 0.50 $g/cm^3$ and less than about 1.50 $g/cm^3$, greater than or equal to about 0.60 $g/cm^3$ and less than about 1.50 $g/cm^3$, greater than or equal to about 0.70 $g/cm^3$ and less than about 1.50 $g/cm^3$, greater than or equal to about 0.50 $g/cm^3$ and less than or equal to about 1.40 $g/cm^3$, greater than or equal to about 0.50 $g/cm^3$ and less than or equal to about 1.30 $g/cm^3$, greater than or equal to about 0.50 $g/cm^3$ and less than or equal to about 1.20 $g/cm^3$, greater than or equal to about 0.50 $g/cm^3$ and less than or equal to about 1.10 $g/cm^3$, greater than or equal to about 0.50 $g/cm^3$ and less than or equal to about 1.00 $g/cm^3$, or greater than or equal to about 0.50 $g/cm^3$ and less than or equal to about 0.90 $g/cm^3$, or from any and all ranges and sub-ranges between the foregoing values. The pressing mechanism may include an ultrasonic gauge used to measure the density of the molded precursor mass. Once the soot particles are pressed to produce the molded precursor mass having the desired initial density, as measured by the ultrasonic gauge, movement of the pressing plate of the pressing apparatus may be stopped. In embodiments, the soot particles may be pressed at a constant pressing rate followed by an extended hold to form the molded precursor mass.

Referring again to FIG. 5, the method 500 may comprise heating the molded precursor mass, wherein the heating comprises exposing the molded precursor mass to a consolidation environment having a consolidation temperature, at step 430, and maintaining the molded precursor mass in the consolidation environment while reducing the consolidation temperature, at step 440. The exposing the molded precursor mass to a consolidation environment having a consolidation temperature of step 430 and the maintaining the molded precursor mass in the consolidation environment while reducing the consolidation temperature of step 440 may be conducted in accordance with the procedures and conditions previously described in conjunction with method 400 of FIG. 4. In embodiments, the method 500 may further comprise melting the silica-based glass into a melt that flows into a mold, at step 450, and cooling the melt to form a silica-based glass, at step 460.

Method of forming a glass article may comprise the silica-based glass of any of the embodiments disclosed herein, according to methods known in the art.

EXAMPLES

Embodiments will be further clarified by the following examples. It should be understood that these examples are not limiting to the embodiments described above.

Comparative Example A- Method of forming silica-based glass through consolidation

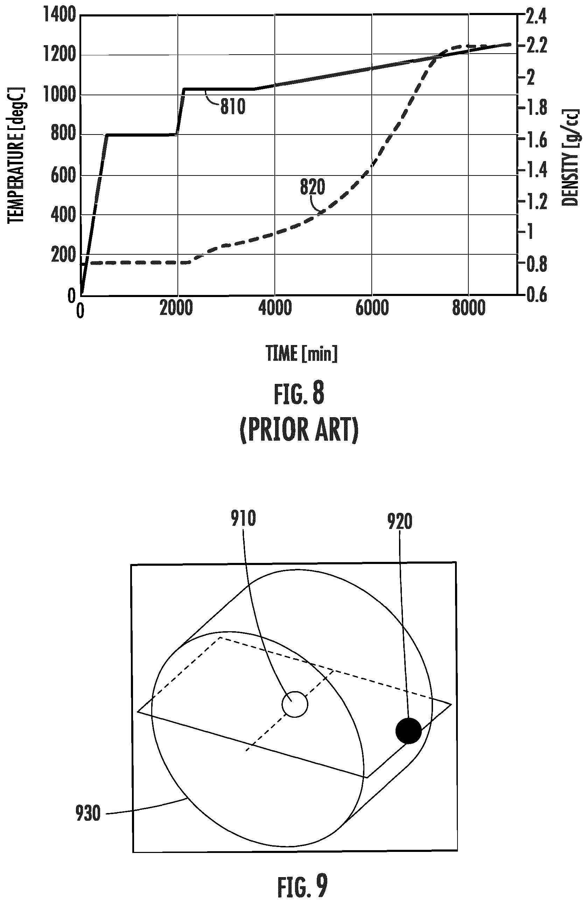

In Comparative Example A, a glass substrate comprising a silica-based glass was produced. Loose soot particles were formed using system 600, as described herein. Specifically, loose soot particles were formed using octamethylcyclotetrasiloxane as the silica precursor and titanium tetraisopropoxide as the titania precursor to produce soot particles comprising 7 wt.% titania and 93 wt% $SiO_2$. The loose soot particles were collected and molded into a molded precursor mass having a radius (r) of 76.2 mm, a height (h) of 7.62 mm, and a density of 0.8 $g/cm^3$. The molded precursor mass was introduced to a furnace and heated according to FIG. 7. Specifically, at time (t)= 0, the molded precursor mass was heated at a ramp rate of 85 °C per hour in air until reaching 800 °C (t =544 min) The molded precursor mass was then held at 800 °C for 24 hours. At t = 2000 minutes, steam was introduced into the furnace at a pressure of 33.33 kPa, and the temperature was increased to 1030 °C. At t = 3500 minutes, the furnace temperature was increased at a ramping rate of 2.5 °C/hour until t = 9000 minutes. The density of the molded precursor mass throughout the heat treatment 820 and the temperature of the heat treatment 810 over time is shown in FIG. 8. As shown in FIG. 8, the density of the molded precursor mass began to increase at a temperature above 1000 °C. That is, the consolidation of the molded precursor mass began at a temperature greater than 1000 °C. The density continued increasing through the consolidation process until reaching a density of 2.2 g/cm³, producing a silica-based glass.

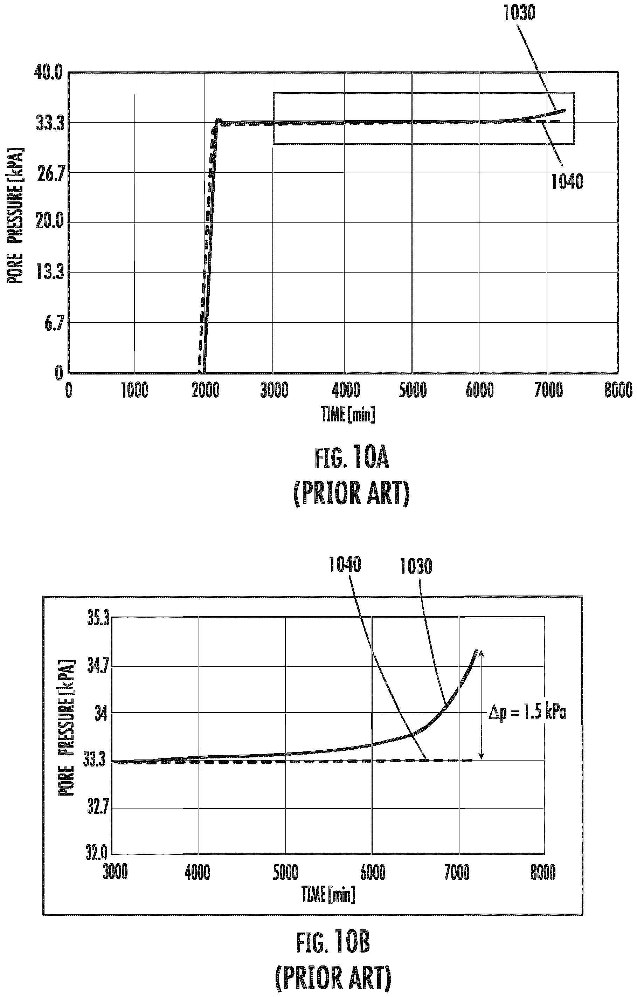

FIG. 9 schematically depicts a molded precursor mass 930 having a center point 910 and an outer point 920. The steam pressure at the center point 910 and at the outer point 920 within the molded precursor mass 930 during heat treatment was modeled. The model considered reactivity of hydroxyl groups, diffusion of hydroxyl groups, and variation in the pore size of molded precursor mass with temperature during the heat treatment. The results of the model are presented in FIGS. 10A and 10B, which show the pore pressure (kPa) (y-axis) (partial pressure of steam in pores of the molded precursor mass), as a function of heating time (x-axis) at the center point 1030 and the outer point 1040. During a first portion of the heat treatment, the steam pressure at the center point 1030 and outer point 1040 within the molded precursor mass are approximately equal and each pressure is approximately the same as the steam pressure within the furnace (33.33 kPa). Similarity of steam pressure at the center point and outer point in the early stages of heat treatment is an indication that the pores of the molded precursor mass are sufficiently open to enable uninhibited diffusion of steam and hydroxyl groups. The steam pressure at the outer point 1040 remained steady throughout the heat treatment and is controlled by the furnace steam pressure. However, at approximately t = 5500 minutes (see FIG. 10B), the steam pressure of the center point 1030 began to increase, resulting in a difference in steam pressure between center point and outer point of 1.5 kPa at t = 7200 minutes, as shown in FIG. 10B, which is a magnified portion of FIG. 10A. Not intending to be limited by any particular theory, it is believed that as the consolidation process continues and the density of the molded precursor mass increases, the pores of the molded precursor mass begin to close due to sintering during consolidation. This sintering leads to decreased gas permeability in the molded precursor mass as steam becomes trapped in collapsing pores. As a result, the partial pressure of steam increases in the interior of the molded precursor mass with the effect being most pronounced near the center point of the molded precursor mass.

A concentration of hydroxyl groups across the diameter of the consolidated product of Comparative Example A was modeled. Specifically, the equilibrium hydroxyl group concentration is a function of temperature and steam partial pressure. In the model, equation (5) is adapted from D.L. Wood and James S. Shirk, "Partition of Hydrogen in the Modified Chemical Vapor Deposition Process", J. Am. Ceram. Soc. 64 [6] (1981) 325-327, to calculate the equilibrium hydroxyl group ([OH]) concentration:

$$c_{OH}[ppm] = 492 \times exp\left[\frac{1555}{T}\right] \times \sqrt{p_{H_2O}} \qquad \text{EQU. 5}$$

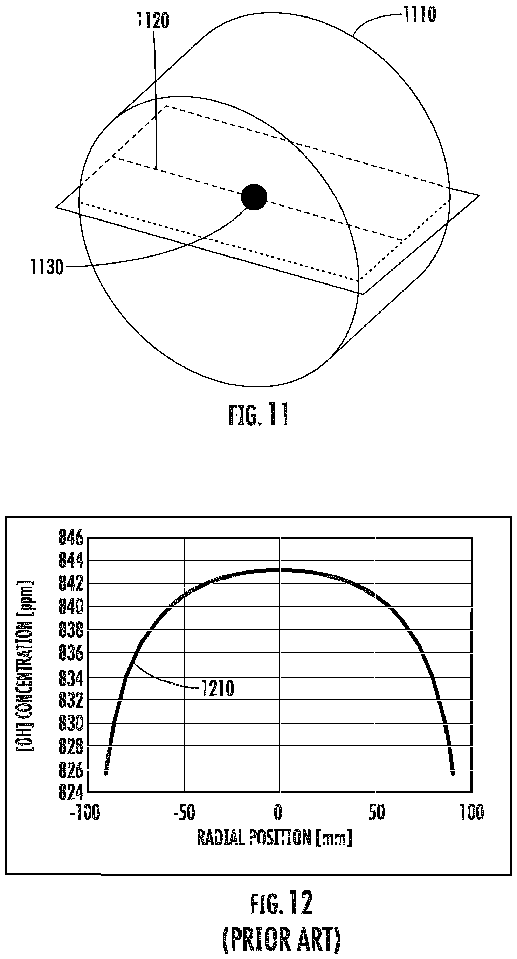

where $c_{OH}$[ppm] is the equilibrium concentration of [OH] in ppm, T is the temperature, and $P_{H2O}$ is the relative steam partial pressure, i.e. ratio of steam partial pressure to the atmospheric pressure. The [OH] concentration of the consolidated product 1110 radially outward along line 1120 from a center point 1130, as shown in FIG. 11, is calculated according to equation 5. The hydroxyl group concentration of Comparative Example A as a function of radial position along line 1120 from the center point 1130 is plotted 1210 in FIG. 12. As shown, the hydroxyl group concentration at the center point is 843 ppm, whereas the hydroxyl group concentration at the outer point is 826 ppm.

Example 1- Method of forming silica-based glass that includes reducing the consolidation temperature during heating

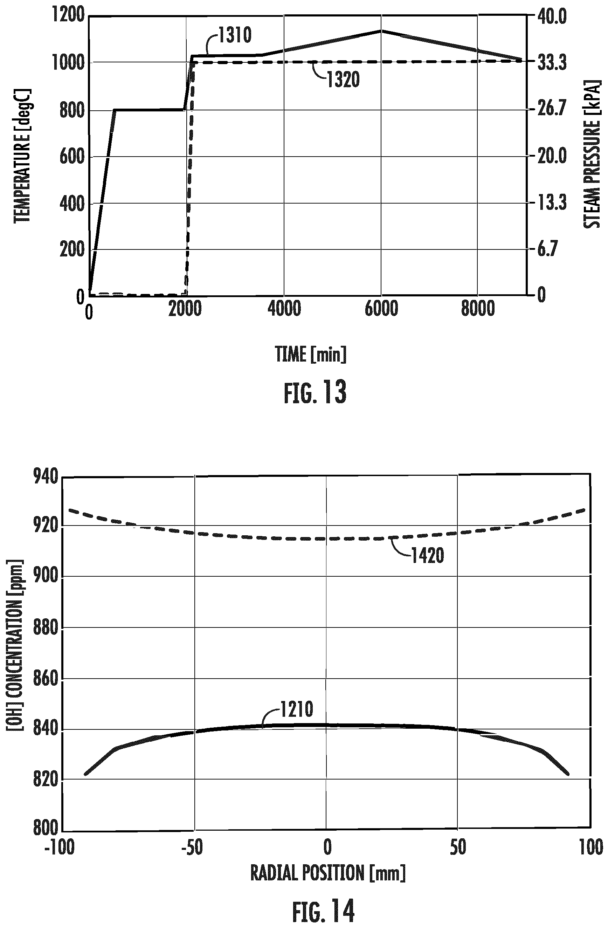

In Example 1, a glass substrate comprising a silica-based glass was produced according to the methods disclosed herein, including reducing the consolidation temperature during the consolidation phase. The molded precursor mass of Example 1 was prepared from soot particles according to the method in Comparative Example A, having a radius (r) of 76.2 mm, a height (h) of 7.62 mm, and a density of 0.8 g/cm³. After forming the molded precursor mass, the molded precursor mass was consolidated by heating the molded precursor mass in a consolidation environment according to the heating schedule shown in FIG. 13 where the temperature (y-axis-left) 1310 and steam partial pressure (y-axis-right) 1320 are plotted as a function of time Specifically, at time (t)= 0, the molded precursor mass was heated at a ramp rate of 85 °C per hour in air until reaching 800 °C (t =544 min). The molded precursor mass was then held at 800 °C for 24 hours. At t = 2000 minutes, steam was introduced into the furnace at a partial pressure of 33.33 kPa, and the temperature was increased to 1030 °C. At t = 3500 minutes, the furnace temperature was increased at a rate of 2.5 °C/hour until t = 6000 minutes. At t = 6000 minutes, the molded precursor mass had a density of approximately 1.4 g/cm³. The furnace temperature was then reduced at a temperature ramp down rate of 2.5 °C/hour until t = 8400 minutes.

A hydroxyl group concentration across line 1120 of the consolidated product of Example 1 was modeled according to equation 5. The calculated hydroxyl group concentrations along the diameter of the consolidated product of Example 1 and Comparative Example A are plotted in FIG. 14. The hydroxyl group concentration of Comparative Example A (Trace 1210) and Example 1 (Trace 1420) as a function of radial position along line 1120 from the center point 1130 is plotted in FIG. 14. As shown in FIG. 14, the average hydroxyl group concentration of Example 1 is greater than Comparative Example A. The peak-to-valley difference of the hydroxyl group concentration was 11 ppm in Example 1 and 17 ppm in Comparative Example A. Thus, reducing the consolidation temperature during the heating increased homogeneity of hydroxyl groups in silica-based glasses. Further, the hydroxyl group concentration at the center point 1130 in Example 1 was less than the hydroxyl group concentration at the outer point. This example shows that maintaining the molded precursor mass in the consolidation environment while reducing the consolidation temperature leads to control of the average concentration, spatial distribution, and uniformity of hydroxyl groups in the glass substrate.

Example 2- Effects of Changing the Temperature Ramp Down Rate During Consolidation

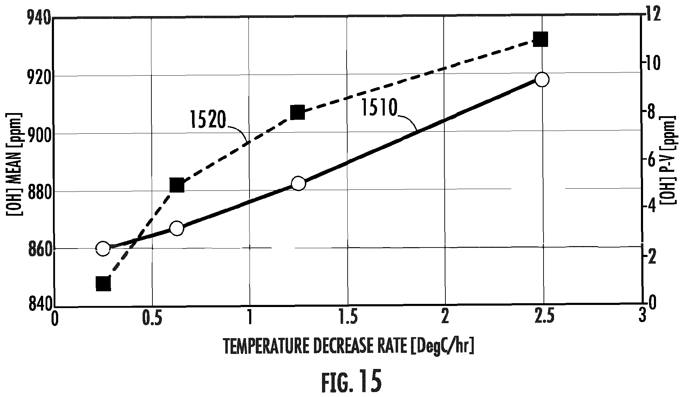

In Example 2, glass substrates comprising silica-based glasses were produced according to Example 1, except that the furnace temperature was reduced at a rate of 0.25 °C per hour, 0.7 °C per hour, and 1.25 °C per hour, corresponding to Examples 2-1, 2-2, and 2-3, respectively. The overall consolidation time of each of the examples were adjusted such that each of the silica based glasses produced had the same final density. The average hydroxyl group concentration 1510 and the peak-to-valley difference of hydroxyl group concentration 1520 is depicted in FIG. 15. As shown in FIG. 15, reducing the consolidation temperature at a rate of 0.25 °C per hour can sufficiently offset the impact of vapor pressure gradient during consolidation, resulting in a peak-to-valley difference in hydroxyl group concentration radially out from the center of less than 1 ppm. As shown in Example 2, the gradient of the hydroxyl group concentration may be changed by changing the rate at which the consolidation temperature is reduced.

It will be apparent to those skilled in the art that various modifications and variations can be made without departing from the spirit or scope of the illustrated embodiments. Since modifications, combinations, sub-combinations and variations of the disclosed embodiments that incorporate the spirit and substance of the illustrated embodiments may occur to persons skilled in the art, the description should be construed to include everything within the scope of the appended claims and their equivalents.

The disclosure further comprises the following clauses (1) to (40).

(1). A glass substrate comprising a silica-based glass, the silica-based glass comprising silica, and from greater than or equal to 0 weight percent (wt.%) to less than or equal to 15.0 wt.% titania, wherein:

a first portion of the silica-based glass has a height of 1.0 millimeter (mm) and a first cross-section having an area greater than or equal to 50.0 cm$^2$, wherein the first cross-section is perpendicular to a direction of the height of the first portion; and

a first sub-portion of the first portion of the silica-based glass has a height of 1.0 mm, a length of 40.0 mm, a width of 40.0 mm, and a second cross-section wherein:

the second cross-section is perpendicular to a direction of the height of the first sub-portion; and
a peak-to-valley difference of a hydroxyl group concentration of the first sub-portion is less than or equal to 15 parts per million (ppm), as measured at the second cross-section.

(2). The glass substrate of clause (1), wherein the silica-based glass has a height of greater than 5.0 mm.

(3). The glass substrate of clause (1) or clause (2), wherein the silica-based glass has a largest dimension greater than or equal to 100 mm, greater than or equal to 200 mm, or greater than or equal to 500 mm, or greater than or equal to 1.0 m.

(4). The glass substrate of any one of clauses (1) to (3), wherein the first cross-section has an area greater than or equal to 75.0 cm$^2$, greater than or equal to 100.0 cm$^2$, greater than or equal to 125.0 cm$^2$, greater than or equal to 150.0 cm$^2$, or greater than or equal to 175.0 cm$^2$.

(5). The glass substrate of any one of clauses (1) to (4), wherein the first sub-portion of the first portion of the silica-based glass has an average hydroxyl group concentration of greater than or equal to 600 ppm, greater than or equal to 700 ppm, or greater than or equal to 800 ppm.

(6). The glass substrate of any one of clauses (1) to (5), wherein the first sub-portion of the first portion of the silica-based glass has an average hydroxyl group concentration of from greater than or equal to 50 ppm to less than or equal to 2000 ppm.

(7). The glass substrate of any one of clauses (1) to (6), wherein the first sub-portion of the first portion of the silica-based glass has a peak-to-valley difference of hydroxyl group concentration of less than or equal to 12.0 ppm, less than or equal to 10.0 ppm, less than or equal to 8.0 ppm, less than or equal to 5.0 ppm, less than or equal to 3.0 ppm, or less than or equal to 1.0 ppm.

(8). The glass substrate of any one of clauses (1) to (7), wherein the silica-based glass comprises from greater than or equal to 5.0 wt.% to less than or equal to 10.0 wt.% titania.

(9). The glass substrate of any one of clauses (1) to (8), wherein the silica-based glass has a mass of from 100 grams to 1 kilogram.

(10). The glass substrate of any one of clauses (1) to (9), wherein silica-based glass has a mass of greater than or equal to 1 kilogram.

(11). The glass substrate of any one of clauses (1) to (10), wherein the first sub-portion of the first portion of the silica-based glass has a coefficient of thermal expansion (CTE) at 20 °C of from greater than or equal to -45.0 ppb/K to less than or equal to 20.0 ppb/K.

(12). The glass substrate of any one of clauses (1) to (11), wherein the first sub-portion of the first portion of the silica-based glass has a slope of CTE at 20 °C of from greater than or equal to 1.0 $ppb/K^2$ to less than or equal to 2.5 $ppb/K^2$.

(13). The glass substrate of any one of clauses (1) to (12), wherein the first portion of the silica-based glass has a center point and an outer point, the outer point being radially outward from the center point, and wherein a hydroxyl group concentration at the outer point is greater than a hydroxyl group concentration at the center point.

(14). The glass substrate of any one of clauses (1) to (13), wherein hydroxyl groups are distributed throughout the silica-based glass.

(15). The glass substrate of any one of clauses (1) to (14), wherein:

a second sub-portion of the first portion a height of 1.0 mm, a length of 40.0 mm, a width of 40.0 mm, and a third cross-section wherein:

the third cross-section is perpendicular to a direction of the height of the second sub-portion; and
a center point of the second cross-section and a center point of the third cross-section are separated by a horizontal separation distance; and

an absolute value of a difference of an average hydroxyl group concentration of the first sub-portion, as measured at the second cross-section, and an average hydroxyl group concentration of the second sub-portion, as measured at the third cross-section, is less than or equal to 15.0 ppm.

(16). The glass substrate of clause (15), wherein the horizontal separation distance is greater than or equal to 5.0 mm, greater than or equal to 20.0 mm, greater than or equal to 50.0 mm, or greater than or equal to 75.0 mm.

(17). The glass substrate of clause (15) or clause (16), wherein the absolute value of the difference of the average hydroxyl group concentration of the first sub-portion and the average hydroxyl group concentration of the second sub-portion is less than or equal to 10.0 ppm, less than or equal to 5.0 ppm, less than or equal to 3.0 ppm, or less than or equal to 2.0 ppm.

(18). The glass substrate of any one of clauses (1) to (17), wherein:

a second portion of the silica-based glass has a height of 1.0 millimeter (mm) and a fourth cross-section having an area greater than or equal to 50.0 $cm^2$, wherein the fourth cross-section is perpendicular to a direction of the height of the second portion; and
a third sub-portion of the second portion of the silica-based glass has a height of 1.0 mm, a length of 40.0 mm, a width of 40.0 mm, and a fifth cross-section wherein:

the fifth cross-section is perpendicular to a direction of the height of the third sub-portion; and
the third sub-portion of the second portion and the first sub-portion of the first portion are parallel and separated by a vertical separation distance; and

an absolute value of a difference of an average hydroxyl group concentration of the first sub-portion, as measured at the second cross-section, and an average hydroxyl group concentration of the third sub-portion, as measured at the fifth cross-section, is less than or equal to 15.0 ppm.

(19). The glass substrate of clause (18), wherein the vertical separation distance is greater than or equal to 1 mm, greater than or equal to 2 mm, greater than or equal to 3 mm, greater than or equal to 4 mm, or greater than or equal to 5 mm.

(20). The glass substrate of clause (18) or clause (19), wherein the absolute value of the difference of the average hydroxyl group concentration of the first sub-portion and the average hydroxyl group concentration of the second sub-portion is less than or equal to 10.0 ppm, less than or equal to 5.0 ppm, less than or equal to 3.0 ppm, or less than or equal to 2.0 ppm.

(21). A method of forming a glass substrate comprising a silica-based glass, comprising:
heating a molded precursor mass, the molded precursor mass comprising soot particles, the soot particles comprising silica and less than or equal to 15 wt.% titania, the heating comprising:

exposing the molded precursor mass to a consolidation environment having a consolidation temperature, the consolidation environment containing steam, the exposing comprising maintaining the molded precursor mass in the consolidation environment for a time sufficient to increase a density of the molded precursor mass from an initial density to a threshold density, the threshold density less than 2.00 g/cm$^3$; and

maintaining the molded precursor mass in the consolidation environment while reducing the consolidation temperature, the maintaining increasing the density of the molded precursor mass from the threshold density to a final density greater than 2.00 g/cm$^3$.

(22). The method of clause (21), wherein the initial density is less than or equal to 1.20 g/cm$^3$.

(23). The method of clause (21) or clause (22), wherein the threshold density is greater than or equal to 1.20 g/cm$^3$ and less than or equal to 1.60 g/cm$^3$.

(24). The method of any one of clauses (21) to (23), wherein:

a first portion of the silica-based glass has a height of 1.0 mm and a first cross-section having an area greater than or equal to 50.0 cm$^2$, wherein the first cross-section is perpendicular to a direction of the height of the first portion; and

a first sub-portion of the first portion of the silica-based glass has a height of 1.0 mm, a length of 40.0 mm, a width of 40.0 mm, and a second cross-section wherein:

the second cross-section is perpendicular to a direction of the height of the first sub-portion; and

a peak-to-valley difference of a hydroxyl group concentration of the first sub-portion, is less than or equal to 15 parts per million (ppm), as measured at the second cross-section.

(25). The method of any one of clauses (21) to (24), further comprising, prior to heating the molded precursor mass, forming soot particles as loose soot particles.

(26). The method of any one of clauses (21) to (25), further comprising, prior to heating the molded precursor mass, molding soot particles into a molded precursor mass having an initial density of from greater than or equal to 0.50 g/cm$^3$ to less than 1.50 g/cm$^3$.

(27). The method of any one of clauses (21) to (26), wherein the heating comprises subjecting the molded precursor mass to the consolidation environment into which steam is introduced to achieve a partial pressure of steam within the consolidation environment of from greater than or equal to 0.10 kilopascals (kPa) to less than or equal to 1,000 kPa.

(28). The method of any one of clauses (21) to (27), wherein the consolidation environment comprises greater than or equal to 50 volume percent (vol.%), greater than or equal to 60 vol.%, greater than or equal to 70 vol.%, greater than or equal to 80 vol.%, greater than or equal to 90 vol.%, greater than or equal to 95 vol.%, greater than or equal to 99 vol.%, or 100 vol.% steam, based on a total volume of gases in the consolidation environment.

(29). The method of any one of clauses (21) to (28), wherein the consolidation environment comprises a partial pressure of steam of from greater than or equal to 0.10 kilopascals (kPa) to less than or equal to 100 kPa.

(30). The method of any one of clauses (21) to (29), wherein the consolidation temperature is of from 900 °C to 1300 °C.

(31). The method of any one of clauses (21) to (30), wherein the heating is operated for a time of from 10 hours to 300 hours.

(32). The method of any one of clauses (21) to (31), wherein:

the consolidation temperature is of from 1,000 °C to 1,200 °C; and

the heating is operated for a time of from 50 hours to 200 hours.

(33). The method of any one of clauses (21) to (32), wherein the heating comprises increasing the consolidation temperature at a rate of from 0.50 °C per hour to 100 °C per hour for a first duration of time.

(34). The method of clause (33), wherein maintaining the molded precursor mass in the consolidation environment while reducing the consolidation temperature comprises, after the first duration of time, reducing the consolidation temperature at a rate of from 0.010 °C per hour to 5.0 °C per hour for a second duration of time.

(35). The method of either one of clauses (33) or (34), wherein the first duration of time is from 10 hours to 100 hours.

(36). The method of any one of clauses (21) to (35), wherein maintaining the molded precursor mass in the consolidation environment while reducing the consolidation temperature comprises reducing the consolidation temperature at a rate of from about 0.10 °C per hour to 5.0 °C per hour for a second duration of time.

(37). The method of any one of clauses (21) to (36), wherein maintaining the molded precursor mass in the consolidation environment while reducing the consolidation temperature comprises reducing the consolidation temperature at a rate of from 0.10 °C per hour to 2.50 °C per hour for a second duration of time.

(38). The method of any one of clauses (34) to (37), wherein the second duration of time is of from 10 hours to 100 hours.

(39). The method of any one of clause (21) to (38), further comprising:

melting the glass substrate into a melt that flows into a mold; and
cooling the melt.

(40). A method of forming a glass article comprising the glass substrate of any one of clauses (1) to (20).

**Claims**

1. A glass substrate comprising a silica-based glass, the silica-based glass comprising silica, and from greater than or equal to 0 weight percent (wt.%) to less than or equal to 15.0 wt.% titania, wherein:

   a first portion of the silica-based glass has a height of 1.0 millimeter (mm) and a first cross-section having an area greater than or equal to 50.0 cm$^2$, wherein the first cross-section is perpendicular to a direction of the height of the first portion; and
   a first sub-portion of the first portion of the silica-based glass has a height of 1.0 mm, a length of 40.0 mm, a width of 40.0 mm, and a second cross-section wherein:

   the second cross-section is perpendicular to a direction of the height of the first sub-portion; and
   a peak-to-valley difference of a hydroxyl group concentration of the first sub-portion is less than or equal to 15 parts per million (ppm), as measured at the second cross-section.

2. The glass substrate of claim 1, wherein:

   the silica-based glass has a height of greater than 5.0 mm;
   the silica-based glass has a largest dimension greater than or equal to 100 mm, greater than or equal to 200 mm, or greater than or equal to 500 mm, or greater than or equal to 1.0 m; and/or
   the first cross-section has an area greater than or equal to 75.0 cm$^2$, greater than or equal to 100.0 cm$^2$, greater than or equal to 125.0 cm$^2$, greater than or equal to 150.0 cm$^2$, or greater than or equal to 175.0 cm$^2$.

3. The glass substrate of claim 1 or 2, wherein the first sub-portion of the first portion of the silica-based glass has an average hydroxyl group concentration of:

   greater than or equal to 600 ppm, greater than or equal to 700 ppm, or greater than or equal to 800 ppm; or
   from greater than or equal to 50 ppm to less than or equal to 2000 ppm.

4. The glass substrate of any one of claims 1 to 3, wherein

   the first sub-portion of the first portion of the silica-based glass has a peak-to-valley difference of hydroxyl group concentration of less than or equal to 12.0 ppm, less than or equal to 10.0 ppm, less than or equal to 8.0 ppm, less than or equal to 5.0 ppm, less than or equal to 3.0 ppm, or less than or equal to 1.0 ppm;
   the silica-based glass comprises from greater than or equal to 5.0 wt.% to less than or equal to 10.0 wt.% titania;
   the silica-based glass has a mass of from 100 grams to 1 kilogram or a mass of greater than or equal to 1 kilogram;
   the first sub-portion of the first portion of the silica-based glass has a coefficient of thermal expansion (CTE) at 20 °C of from greater than or equal to -45.0 ppb/K to less than or equal to 20.0 ppb/K; and/or
   the first sub-portion of the first portion of the silica-based glass has a slope of CTE at 20 °C of from greater than or equal to 1.0 ppb/K$^2$ to less than or equal to 2.5 ppb/K$^2$.

5. The glass substrate of any one of claims 1 to 4, wherein the first portion of the silica-based glass has a center point and an outer point, the outer point being radially outward from the center point, and wherein a hydroxyl group concentration at the outer point is greater than a hydroxyl group concentration at the center point.

6. The glass substrate of any one of claims 1 to 5, wherein:
   a second sub-portion of the first portion a height of 1.0 mm, a length of 40.0 mm, a width of 40.0 mm, and a third cross-section wherein:

   the third cross-section is perpendicular to a direction of the height of the second sub-portion; and
   a center point of the second cross-section and a center point of the third cross-section are separated by a horizontal separation distance; and

an absolute value of a difference of an average hydroxyl group concentration of the first sub-portion, as measured at the second cross-section, and an average hydroxyl group concentration of the second sub-portion, as measured at the third cross-section, is less than or equal to 15.0 ppm,

wherein the horizontal separation distance is preferably greater than or equal to 5.0 mm, preferably greater than or equal to 20.0 mm, preferably greater than or equal to 50.0 mm, or preferably greater than or equal to 75.0 mm, and

wherein the absolute value of the difference of the average hydroxyl group concentration of the first sub-portion and the average hydroxyl group concentration of the second sub-portion is preferably less than or equal to 10.0 ppm, preferably less than or equal to 5.0 ppm, preferably less than or equal to 3.0 ppm, or preferably less than or equal to 2.0 ppm.

7. The glass substrate of any one of claims 1 to 6, wherein:

a second portion of the silica-based glass has a height of 1.0 millimeter (mm) and a fourth cross-section having an area greater than or equal to 50.0 $cm^2$, wherein the fourth cross-section is perpendicular to a direction of the height of the second portion; and

a third sub-portion of the second portion of the silica-based glass has a height of 1.0 mm, a length of 40.0 mm, a width of 40.0 mm, and a fifth cross-section wherein:

the fifth cross-section is perpendicular to a direction of the height of the third sub-portion; and
the third sub-portion of the second portion and the first sub-portion of the first portion are parallel and separated by a vertical separation distance; and

an absolute value of a difference of an average hydroxyl group concentration of the first sub-portion, as measured at the second cross-section, and an average hydroxyl group concentration of the third sub-portion, as measured at the fifth cross-section, is less than or equal to 15.0 ppm,

wherein the vertical separation distance is preferably greater than or equal to 1 mm, preferably greater than or equal to 2 mm, preferably greater than or equal to 3 mm, preferably greater than or equal to 4 mm, or preferably greater than or equal to 5 mm,

wherein the absolute value of the difference of the average hydroxyl group concentration of the first sub-portion and the average hydroxyl group concentration of the second sub-portion is preferably less than or equal to 10.0 ppm, preferably less than or equal to 5.0 ppm, preferably less than or equal to 3.0 ppm, or preferably less than or equal to 2.0 ppm.

8. A method of forming a glass substrate comprising a silica-based glass, comprising:

heating a molded precursor mass, the molded precursor mass comprising soot particles, the soot particles comprising silica and less than or equal to 15 wt.% titania, the heating comprising:

exposing the molded precursor mass to a consolidation environment having a consolidation temperature, the consolidation environment containing steam, the exposing comprising maintaining the molded precursor mass in the consolidation environment for a time sufficient to increase a density of the molded precursor mass from an initial density to a threshold density, the threshold density less than 2.00 $g/cm^3$; and

maintaining the molded precursor mass in the consolidation environment while reducing the consolidation temperature, the maintaining increasing the density of the molded precursor mass from the threshold density to a final density greater than 2.00 $g/cm^3$,

wherein preferably:

the initial density is less than or equal to 1.20 $g/cm^3$, and/or
the threshold density is greater than or equal to 1.20 $g/cm^3$ and less than or equal to 1.60 $g/cm^3$.

9. The method of claim 8, wherein:

a first portion of the silica-based glass has a height of 1.0 mm and a first cross-section having an area greater than or equal to 50.0 $cm^2$, wherein the first cross-section is perpendicular to a direction of the height of the first portion; and

a first sub-portion of the first portion of the silica-based glass has a height of 1.0 mm, a length of 40.0 mm, a width of 40.0 mm, and a second cross-section wherein:

the second cross-section is perpendicular to a direction of the height of the first sub-portion; and
a peak-to-valley difference of a hydroxyl group concentration of the first sub-portion, is less than or equal to 15 parts per million (ppm), as measured at the second cross-section.

10. The method of claim 8 or 9, further comprising, prior to heating the molded precursor mass, forming soot particles as loose soot particles.

11. The method of any one of claims 8 to 10, further comprising, prior to heating the molded precursor mass, molding soot particles into a molded precursor mass having an initial density of from greater than or equal to 0.50 g/cm$^3$ to less than 1.50 g/cm$^3$.

12. The method of any one of claims 8 to 11, wherein:

the heating comprises subjecting the molded precursor mass to the consolidation environment into which steam is introduced to achieve a partial pressure of steam within the consolidation environment of from greater than or equal to 0.10 kilopascals (kPa) to less than or equal to 1,000 kPa;
the consolidation environment comprises greater than or equal to 50 volume percent (vol.%), greater than or equal to 60 vol.%, greater than or equal to 70 vol.%, greater than or equal to 80 vol.%, greater than or equal to 90 vol.%, greater than or equal to 95 vol.%, greater than or equal to 99 vol.%, or 100 vol.% steam, based on a total volume of gases in the consolidation environment;
the consolidation environment comprises a partial pressure of steam of from greater than or equal to 0.10 kilopascals (kPa) to less than or equal to 100 kPa;
the consolidation temperature is of from 900 °C to 1300 °C;
the heating is operated for a time of from 10 hours to 300 hours;
the consolidation temperature is of from 1,000 °C to 1,200 °C and the heating is operated for a time of from 50 hours to 200 hours;
maintaining the molded precursor mass in the consolidation environment while reducing the consolidation temperature comprises reducing the consolidation temperature at a rate of from about 0.10 °C per hour to 5.0 °C per hour for a second duration of time, wherein the second duration of time preferably is of from 10 hours to 100 hours; and/or
maintaining the molded precursor mass in the consolidation environment while reducing the consolidation temperature comprises reducing the consolidation temperature at a rate of from 0.10 °C per hour to 2.50 °C per hour for a second duration of time, wherein the second duration of time preferably is of from 10 hours to 100 hours.

13. The method of any one of claims 8 to 12, wherein the heating comprises increasing the consolidation temperature at a rate of from 0.50 °C per hour to 100 °C per hour for a first duration of time, wherein the first duration of time preferably is from 10 hours to 100 hours,
wherein maintaining the molded precursor mass in the consolidation environment while reducing the consolidation temperature preferably comprises, after the first duration of time, reducing the consolidation temperature at a rate of from 0.010 °C per hour to 5.0 °C per hour for a second duration of time, wherein the second duration of time preferably is of from 10 hours to 100 hours.

14. The method of any one of claims 8 to 13, further comprising:

melting the glass substrate into a melt that flows into a mold; and
cooling the melt.

15. A method of forming a glass article comprising the glass substrate of any one of claims 1 to 7.

**FIG. 1A**

**FIG. 1B**

**FIG. 2**

FIG. 3

FIG. 4

500

```
┌─────────────────────────┐
│          410            │
└─────────────────────────┘
             │
             ▼
┌─────────────────────────┐
│          420            │
└─────────────────────────┘
             │
             ▼
┌─────────────────────────┐
│          430            │
└─────────────────────────┘
             │
             ▼
┌─────────────────────────┐
│          440            │
└─────────────────────────┘
             │
             ▼
┌─────────────────────────┐
│          450            │
└─────────────────────────┘
             │
             ▼
┌─────────────────────────┐
│          460            │
└─────────────────────────┘
```

FIG. 5

600

1272   1272   1272

1270

1264'   1264'   1264'

1242

1226

1220

1248   1244

1252   1252

1254   1250

1236

1224   1222

1260

1232   1234

1230

1264

FIG. 6

1400 ──────────────── 40.0

720

700

TEMPERATURE [degC]

STEAM PRESSURE [kPA]

1200

1000

800

600

400

200

0

33.3

26.7

20.0

13.3

6.7

0

0   2000   4000   6000   8000

TIME [min]

FIG. 7
(PRIOR ART)

FIG. 8
(PRIOR ART)

FIG. 9

FIG. 10A
(PRIOR ART)

FIG. 10B
(PRIOR ART)

FIG. 11

FIG. 12
(PRIOR ART)

FIG. 13

FIG. 14

FIG. 15

Europäisches
Patentamt

European
Patent Office

Office européen
des brevets

## EUROPEAN SEARCH REPORT

**Application Number**

EP 24 21 7524

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 039 660 A1 (CORNING INC [US]) 10 August 2022 (2022-08-10) * paragraph [0016]; claims; figures; examples; tables * | 1-15 | INV. C03C3/06 C03C3/076 |
| X | US 2003/195107 A1 (IKUTA YOSHIAKI [JP] ET AL) 16 October 2003 (2003-10-16) * paragraphs [0005], [0140]; claims; examples; tables * | 1-7 | |
| A | US 2008/292882 A1 (AGATA NORIYUKI [JP] ET AL) 27 November 2008 (2008-11-27) * claims; figures; examples * | 1-15 | |
| X,P | EP 4 328 200 A1 (CORNING INC [US]) 28 February 2024 (2024-02-28) * paragraphs [0004] - [0105]; claims; figures; examples * | 1-15 | |
| X,P | EP 4 328 201 A1 (CORNING INC [US]) 28 February 2024 (2024-02-28) * paragraphs [0004] - [0103]; claims; figures; examples * | 1-15 | **TECHNICAL FIELDS SEARCHED (IPC)** C03C C03B |
| X,P | EP 4 406 921 A1 (CORNING INC [US]) 31 July 2024 (2024-07-31) * paragraphs [0004] - [0078]; claims; figures; examples * | 1-15 | |

The present search report has been drawn up for all claims

| Place of search | Date of completion of the search | Examiner |
|---|---|---|
| Munich | 24 January 2025 | Wrba, Jürgen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7524

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2025

| Patent document cited in search report | | | Publication date | Patent family member(s) | | | Publication date |
|---|---|---|---|---|---|---|---|
| EP | 4039660 | A1 | 10-08-2022 | EP | 4039660 | A1 | 10-08-2022 |
| | | | | JP | 2024507486 | A | 20-02-2024 |
| | | | | KR | 20230145104 | A | 17-10-2023 |
| | | | | US | 2022250964 | A1 | 11-08-2022 |
| | | | | WO | 2022173592 | A1 | 18-08-2022 |
| US | 2003195107 | A1 | 16-10-2003 | EP | 1043282 | A1 | 11-10-2000 |
| | | | | US | 6499317 | B1 | 31-12-2002 |
| | | | | US | 2003195107 | A1 | 16-10-2003 |
| | | | | WO | 0024685 | A1 | 04-05-2000 |
| US | 2008292882 | A1 | 27-11-2008 | EP | 1979279 | A1 | 15-10-2008 |
| | | | | US | 2008292882 | A1 | 27-11-2008 |
| | | | | WO | 2007086617 | A1 | 02-08-2007 |
| EP | 4328200 | A1 | 28-02-2024 | EP | 4328200 | A1 | 28-02-2024 |
| | | | | US | 2024069429 | A1 | 29-02-2024 |
| | | | | WO | 2024044114 | A1 | 29-02-2024 |
| EP | 4328201 | A1 | 28-02-2024 | EP | 4328201 | A1 | 28-02-2024 |
| | | | | US | 2024067558 | A1 | 29-02-2024 |
| | | | | WO | 2024044091 | A1 | 29-02-2024 |
| EP | 4406921 | A1 | 31-07-2024 | EP | 4406921 | A1 | 31-07-2024 |
| | | | | TW | 202438459 | A | 01-10-2024 |
| | | | | US | 2024246850 | A1 | 25-07-2024 |
| | | | | WO | 2024158537 | A1 | 02-08-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9580350 B

**Non-patent literature cited in the description**

- **K.M. DAVIS et al.** Quantitative infrared spectroscopic measurement of hydroxyl group concentration in silica glass. *J. Non-Crystalline Solids*, 1996, vol. 203, 27-36

- **D.L. WOOD ; JAMES S. SHIRK**. Partition of Hydrogen in the Modified Chemical Vapor Deposition Process. *J. Am. Ceram. Soc.*, 1981, vol. 64 (6), 325-327